# EUROPÄISCHE PATENTSCHRIFT

(11) **EP 3 955 226 B1**
(45) Veröffentlichungstag und Bekanntmachung des Hinweises auf die Patenterteilung: **19.02.2025**
(21) Anmeldenummer: 20190683.1
(22) Anmeldetag: 12.08.2020
(51) Int. Cl.: G08B 17/107, G08B 17/113

(54) **ANSAUGPARTIKELERKENNUNGSSYSTEM MIT LICHTLEITSYSTEM**
SUCTION PARTICLE DETECTION SYSTEM WITH FIBRE OPTIC SYSTEM
SYSTÈME DE DÉTECTION DES PARTICULES D'ADMISSION POURVU DE SYSTÈME DE GUIDAGE DE LUMIÈRE

(43) Veröffentlichungstag der Anmeldung: 16.02.2022
(73) Patentinhaber: Wagner Group GmbH, 30853 Langenhagen (DE)
(72) Erfinder: Hartwig, Jonas, 30163 Hannover (DE)
(74) Vertreter: Götz, Gudrun Veronika

(56) Entgegenhaltungen:
- EP-A1- 3 321 908
- EP-A1- 3 584 774
- EP-B1- 3 321 908

## Beschreibung

Die Erfindung betrifft ein Ansaugpartikelerkennungssystem zum Erkennen und Lokalisieren eines Brandes und/oder einer Brandentstehung, aufweisend ein Fluidleitungssystem mit mindestens einer Rohr- und/oder Schlauchleitung, die über eine oder mehrere Ansaugöffnungen zur jeweiligen Entnahme einer Prüffluidmenge in einen oder mehrere Überwachungsbereiche mündet und mit einer Ansaugeinrichtung, die zur Erzeugung einer Prüffluidströmung entlang der mindestens einen Rohr- und/oder Schlauchleitung fluidleitend mit der mindestens einen Rohr und/oder Schlauchleitung verbunden ist.

Die Erfindung betrifft außerdem ein Verfahren zum Erkennen und Lokalisieren eines Brandes und/oder einer Brandentstehung in einem oder mehreren Überwachungsbereichen.

Zur Branderkennung in bzw. zur Brandüberwachung von Räumen und Gebäuden hat sich neben einfachen Deckenrauchmeldern, gerade auch zur Überwachung von großen Hallen oder Gebäudekomplexen, die Verwendung sogenannter Ansaugpartikelerkennungssysteme, insbesondere Ansaugbranderkennungssysteme durchgesetzt. Derlei Ansaugbranderkennungssysteme, auch als Ansaugrauchmelder bezeichnet, umfassen eine Ansaugeinrichtung, bspw. einen Lüfter, mittels welcher ununterbrochen eine ausreichend repräsentative Prüffluidmenge, insbesondere Luftmenge, aus einem zu überwachenden Raum oder Bereich eines Gebäudes, dem so bezeichneten Überwachungsbereich, angesaugt wird. Die Ansaugeinrichtung ist hierzu fluidleitend in ein Fluidleitungssystem, insbesondere ein Rohr- und/oder Schlauchsystem integriert. Das Rohr- und/oder Schlauchsystem umfasst mindestens eine oder auch mehrere Rohr- und/oder Schlauchleitungen - im Fachjargon als "Äste" bezeichnet - die über jeweilige Ansaugöffnungen in einen oder mehrere Überwachungsbereiche münden.

Die aus den Überwachungsbereichen jeweils entnommenen Prüffluidmengen werden als Prüffluidströmung entlang des Rohr- und/oder Schlauchsystems transportiert und laufen üblicherweise zentral in einem Detektormodul, insbesondere einem Partikeldetektor zusammen. Für Ansaugbranderkennungssysteme geeignete Detektormodule sind aus dem Stand der Technik bekannt und erfassen im zugeführten Prüffluid enthaltene Streu- und/oder Rauchpartikel. Ein solcher Partikeldetektor weist zumeist einen Lichtsender, bspw. eine lichtemittierende Diode (LED) und oftmals mehrere Lichtempfänger, bspw. Photodioden (PD), auf. Im Lichtstrahl der lichtemittierenden Diode befindliche Streu- und/oder Rauchpartikel bewirken eine Lichtstreuung. Der Streulichtanteil wird von einer oder mehreren Photodioden, die in einem entsprechenden Streulichtwinkel ausgerichtet sind, erfasst und in ein Strom- und/oder Spannungssignal umgewandelt. Da die lichtemittierende Diode zur Erzeugung des Lichtstrahls mit Strom versorgt werden muss bzw. die Photodiode erfasstes Streulicht in ein Strom- und/oder Spannungssignal umwandelt spricht man von sogenannten aktiven Komponenten. Die Strom- und/oder Spannungssignale der Photodioden werden dann als Brandkenngrößen zur Erkennung eines Brandes und/oder einer Brandentstehung analysiert bzw. ausgewertet. Durch die zentrale Erfassung gegebenenfalls im Prüffluid enthaltener Streu- und/oder Rauchpartikel ist eine gleichzeitige Überwachung verschiedenster Überwachungsbereiche, bspw. in einem Gebäudekomplex oder einer großen Halle möglich. Nachteilig ist jedoch, dass aufgrund der zentralen Partikelerkennung eine Lokalisierung des erkannten Brandes und/oder der Brandentstehung nicht möglich ist.

Ein derartiges Ansaugbranderkennungssystem mit einem Streulichtdetektor, einem Rohr- und/oder Schlauchsystem und einer Ansaugeinrichtung zum Erzeugen einer Strömung innerhalb des Rohr- und/oder Schlauchsystems ist zum Beispiel aus der europäischen Offenlegungsschrift EP 3 584 774 A1 bekannt.

Aus dem Stand der Technik sind unterschiedliche Methoden zur Lokalisierung von Bränden und/oder Brandentstehungen in Verbindung mit Ansaugbranderkennungssystemen bekannt. In der Veröffentlichungsschrift WO 93/23736 A1 wird ein Ventil beschrieben, das als Bestandteil eines Verteilers einer Rohrstruktur eines Gasansaugsystems mit einer Vielzahl an Ansaugpunkten vorgesehen ist. In dem Verteiler laufen insgesamt vier Rohrleitungen zusammen, die beispielsweise jeweils in unterschiedliche Bereiche eines zu überwachenden Gebäudes münden. In einem normalen Betriebsmodus sind alle vier Rohranschlüsse geöffnet und fluidleitend mit einem Partikeldetektor zur Detektion von in dem angesaugten Gas vorhandenem Rauch verbunden. Um die Quelle des detektierten Rauchs zu bestimmen, können die Rohranschlüsse über das Ventil selektiv geschlossen werden.

Ein ähnliches Ventil, mit dem sich durch einen Partikeldetektor eines Ansaugrauchdetektionssystems erfasster Rauch einer bestimmten Rohrleitung bzw. einem bestimmten Ast des Rohrsystems zuordnen lässt, ist auch aus der WO 2015/071409 A1 bekannt. Das Ventil umfasst eine Vielzahl an Einlassöffnungen, die von der aus unterschiedlichen Rohrleitungen stammenden, angesaugten Luft durchströmt werden. Sofern mittels eines an das Ventil angeschlossenen Partikelzählers oder Rauchdetektors erkannt wird, dass eine voreingestellte Schwelle an Rauch oder Partikeln überschritten wird, können mit dem Ventil die einzelnen Einlassöffnungen sequenziell geschlossen werden, um die Rohrleitung, aus welcher der angesaugte Rauch bzw. die angesaugten Partikel stammen zu identifizieren. Nachteilig an den beschriebenen Ventilen ist, dass sich die Quelle der detektierten Partikel oder des detektierten Rauchs immer nur einer bestimmten Rohrleitung bzw. einem bestimmten Ast des Rohrleitungssystems zuordnen lässt. Sofern mittels einer einzelnen Rohrleitung über mehrere Ansaugöffnung auch mehrere Bereiche oder Räume überwacht werden, ist eine konkrete Lokalisierung des einzelnen Bereichs oder Raums nicht möglich.

Eine spezifischere Brandlokalisierung wird mit dem aus der Patentschrift EP 1 397 789 B1 bekannten System ermöglicht. Hierin ist ebenfalls ein Branderkennungssystem zum Detektieren und Lokalisieren von Brandherden oder Gasverunreinigungen offenbart, bei dem in jeweiligen Überwachungsräumen angeordnete und mit Ansaugöffnungen versehene Rohrleitungen ständig eine Teilmenge der in den Überwachungsräumen enthaltenen Raumluft einem Hauptdetektor zuführen. Pro Überwachungsraum weist das Branderkennungssystem zusätzlich je ein Magnetventil an oder im Bereich einer Ansaugöffnung auf. Über eine Steuerung können die Magnetventile in Abhängigkeit eines vom Hauptdetektor abgegebenen Detektionssignals geöffnet oder geschlossen werden, um den Brandherd oder die Quelle der Gasverunreinigung zu lokalisieren. Zwar lässt sich mit der beschriebenen Anordnung ein Brandherd auch entlang einer einzelnen Rohrleitung, raum- bzw. bereichsspezifisch lokalisieren oder sogar einer konkreten Ansaugöffnung zuordnen, nachteilig ist jedoch der relativ hohe Zeitverzug bis zur erstmaligen Raucherkennung durch den Hauptdetektor und die anschließende Lokalisierung durch Ansteuern der einzelnen Magnetventile. Darüber hinaus handelt es sich bei Magnetventilen ebenfalls um sogenannte aktive, d. h. stromführende Komponenten, die mit einer eigenen Spannungsquelle versorgt werden. Aktive Komponenten können nicht ohne weiteres in risikoreicher, strahlungsbelasteter und/oder explosionsgefährdeter Umgebung (EX-Umgebung) eingesetzt werden.

In der Patentschrift EP 1 634 261 B1 ist eine Lösung zur Lokalisierung eines Brandherdes mittels eines Ansaugbranderkennungssystems auch ohne Magnetventile offenbart. Sofern von einem Detektor hier eine Brandkenngröße, zum Beispiel Rauch oder Partikel erkannt wird, soll gemäß dem beschriebenen Verfahren durch mehrmaliges Ansaugen und zwischenzeitliches Ausblasen der aus den Überwachungsräumen angesaugten Luft die Laufzeit gemessen werden, bis der Detektor erneut eine Brandkenngröße erfasst. Die Lokalisierung des Brandortes oder des Ortes der Entstehung des Brandes basiert auf der Tatsache, dass jeder einzelne Überwachungsraum eine festgelegte Entfernung vom Detektor und der angesaugte Rauch eine vom Ansaugrohrsystem abhängige Laufzeit aufweist. Auch mit dieser beschriebenen Lösung ist die erstmalige Erfassung und anschließende Lokalisierung eines Brandes oder Brandherdes aufgrund der Laufzeiten der angesaugten Luft durch das Rohrsystem nur mit einem relativ hohen Zeitverzug möglich.

Schließlich ist aus der EP 3 321 908 A1 ein (Brand-)Erkennungssystem zur Überwachung elektrischer Komponenten auf Temperaturanstieg und/oder Rauchentwicklung, welches auf optischen Fasern basiert und ohne ein Fluidleitungssystem auskommt, bekannt. Anstelle der bei den Ansaugbranderkennungssystemen in den zu überwachenden Bereich oder Raum mündenden Ansaugöffnungen ist hier ein sogenannter Knotenpunkt an oder direkt innerhalb der zu überwachenden elektrischen Komponenten vorgesehen. Ein Knotenpunkt ist als rein passive Komponente, d. h. ohne stromführende Bauteile, ausgebildet und besteht im Wesentlichen aus den freiliegenden Enden zweier paralleler Fasern eines Lichtwellenleiters oder eines Glasfaserkabels. Gemäß der Offenbarung können eine Vielzahl von Knotenpunkten über ein Glasfaser- oder Lichtwellenleiterbündel zusammengefasst und mit einem zentralen Kontrollsystem, welches eine Lichtquelle, zum Beispiel eine Laserdiode und einen Lichtempfänger, zum Beispiel eine Photodiode umfasst, lichtleitend verbunden werden. Die Lichtquelle ist dabei mit einer ersten Faser verbunden und wird am jeweiligen Knotenpunkt in die umgebende Atmosphäre ausgestrahlt. Beispielsweise an Rauchpartikeln gestreutes Licht wird am Knotenpunkt über das Ende der zweiten Faser erfasst und entlang des Lichtwellenleiters oder Glasfaserkabels zurück zum zentralen Kontrollsystem geleitet, wo das erfasste Lichtsignal mittels der Photodiode zur weiteren Auswertung in ein Strom- und/oder Spannungssignal umgewandelt wird. Nachteilig an den offenbarten Knotenpunkten ist, dass sich mittels der optischen Faserenden nur ein lokal stark beschränkter Bereich überwachen lässt, weshalb eine Verwendung zur Überwachung größerer Bereiche, Räume oder großer Hallen nicht möglich ist. Auch sind die Auswertemöglichkeiten gegenüber den in Ansaugbranderkennungssystemen verwendeten, hochempfindlichen Streulichtpartikeldetektoren begrenzt.

Eine Aufgabe der vorliegenden Erfindung ist es daher, die Nachteile der aus dem Stand der Technik bekannten Systeme zur Branderkennung zu überwinden und ein verbessertes Ansaugpartikelerkennungssystem, insbesondere Ansaugbranderkennungssystem bereitzustellen. Insbesondere sollen eine schnellere Erkennung und/oder Lokalisierung eines Brandes und oder eines Brandherdes bei gleichzeitig fehlerfreier und hoher Detektionsgenauigkeit sowie eine umgebungsunabhängige Nutzung, insbesondere auch in explosionsgefährdeter Atmosphäre ermöglicht werden.

Die Aufgabe wird gelöst durch ein Ansaugpartikelerkennungssystem gemäß Anspruch 1 und ein Verfahren gemäß Anspruch 10.

Ein erfindungsgemäßes Ansaugpartikelerkennungssystem der eingangs näher beschriebenen Art kennzeichnet sich durch ein Lichtleitsystem mit einem oder mehreren lokalen Detektormodulen, die jeweils zumindest einer Ansaugöffnung zugeordnet und zur lokalen Erfassung und Weiterleitung von an in dem jeweiligen Überwachungsbereich und/oder der Prüffluidströmung vorliegenden Streu- und/oder Rauchpartikeln gestreutem Streulicht und/oder zur Erfassung und Weiterleitung von die Streu- und/oder Rauchpartikel passierendem Durchlicht ausgebildet sind, und mit mindestens einem Lichtleiter, der mit dem einen oder den mehreren lokalen Detektormodulen und einer zentralen Analyseeinrichtung zur Auswertung des von dem einen oder den mehreren lokalen Detektormodulen jeweils erfassten und weitergeleiteten Streulichts und/oder Durchlichts in lichtleitender Verbindung steht. Zur Zuordnung des weitergeleiteten Streulichts und/oder Durchlichts zu den jeweiligen lokalen Detektormodulen umfasst erfindungsgemäß entweder
- die zentrale Analyseeinrichtung mindestens ein Modulationsmittel zur Modulation des von mindestens einer Lichtquelle gesendeten Lichts und zur Zuordnung des von mindestens einem Lichtempfänger erfassten Streulichts und/oder Durchlichts zu den mehreren lokalen Detektormodulen umfasst, oder
- die lokalen Detektormodule sind entlang der mindestens einen Rohr- und/oder Schlauchleitung angeordnet und jeweils einer vorgegebenen Anzahl an Ansaugöffnungen zugeordnet, wobei an dem jeweiligen lokalen Detektormodul ein gewünschtes Verdünnungsverhältnis der Prüffluidströmung bedarfsweise festlegbar ist, oder
- der Lichtleiter umfasst jeweilige, den lokalen Detektormodulen zugeordnete erste und zweite Lichtleitfasern.

Erfindungsgemäß wird somit ein an sich aus dem Stand der Technik bekanntes Ansaugpartikelerkennungssystem, insbesondere Branderkennungssystem, um eine zusätzliche, insbesondere redundante Brand- und/oder Partikelerkennung ergänzt, die durch ein Lichtleitsystem mit einem oder mehreren lokalen Detektormodulen realisiert ist. Die lokalen Detektormodule sind jeweils zumindest einer Ansaugöffnung des Fluidleitungssystems zugeordnet. Hierdurch wird die bereits vorhandene Struktur des Fluidleitungssystems mit dem einen oder den mehren lokalen Detektormodulen kombiniert, wodurch als vorteilhafter Effekt die an sich lokal auf die unmittelbare Umgebung begrenzte Reichweite der lokalen Detektormodule erheblich vergrößert wird. Durch eine kontinuierliche Entnahme von Prüffluidmengen mittels der Ansaugöffnungen aus dem Überwachungsbereich, lässt sich die effektive Reichweite eines bspw. im Ansaugbereich einer Ansaugöffnung angeordneten lokalen Detektormoduls erheblich erhöhen, sodass dieses zur Überwachung von Räumen und/oder oder Hallen eines Gebäudes eingesetzt werden kann. Gleichzeitig wird aber auch, gegenüber der Partikelerkennung, insbesondere Branderkennung, mit einem aus dem Stand der Technik bekannten Ansaugpartikelerkennungssystem, die durch den zeitlichen Transport der Prüffluidmengen entlang der Rohr- und/oder Schlauchleitungen bedingte Zeitspanne bis zur möglichen Erkennung eines Brands wesentlich verringert. In der entnommenen Prüffluidmenge enthaltene Streu- und/oder Rauchpartikel werden nämlich mit dem lokalen Detektormodul unmittelbar im Bereich der einen oder der mehreren Ansaugöffnungen anhand von dort lokal erfasstem Streulicht erkannt und in Form eines Streulichtsignals nahezu unverzögert an die zentrale Analyseeinrichtung weitergeleitet und ermöglichen eine schnelle Branderkennung. Zudem ist der Streu- und/oder Rauchpartikelanteil in der Prüffluidströmung am lokalen Detektormodul höher als an der zentralen Analyseeinrichtung, wodurch die Erkennung vereinfacht wird.

Alternativ zu den typischerweise als Streulichtdetektoren ausgebildeten lokalen Detektormodulen können auch als Durchlichtdetektoren ausgebildete lokale Detektormodule verwendet werden, die entsprechend das die Streu- und/oder Rauchpartikel passierende Durchlicht erfassen und an die zentrale Analyseeinrichtung weiterleiten. Unter Streulicht ist folglich der an Streu- und/oder Rauchpartikeln, insbesondere in einem bestimmten Winkel, gestreute Lichtanteil zu verstehen, der in dem Überwachungsbereich erfasst wird. Der an den Streu- und/oder Rauchpartikeln nicht gestreute Lichtanteil sowie insbesondere auch der, bzgl. der Lichteinfallsrichtung in Vorwärtsrichtung gestreute Lichtanteil wird entsprechend als Durchlicht bezeichnet.

Indem das eine oder die mehreren lokalen Detektormodule jeweils im Bereich von zumindest einer Ansaugöffnung des Ansaugpartikelerkennungssystems positioniert werden, lassen sich die Nachteile der aus dem Stand der Technik bekannten Branderkennungssysteme ausräumen, ohne auf deren weitere Vorteile, wie hohe Detektionsgenauigkeit des Ansaugpartikelerkennungssystems oder besonders schnelle Partikel- bzw. Branderkennung eines lokalen Detektormoduls verzichten zu müssen. Gleichzeitig wird ein redundantes und somit besonders zuverlässiges Branderkennungssystem geschaffen, in dessen Überwachungsbereich ausschließlich passive Bauteile angeordnet sind. Die Kombination eines Fluidleitungssystems mit einem Lichtleitsystem erhöht zudem die Auswertemöglichkeiten, wodurch sich z. B. Störsignale leichter identifizieren lassen.

Zur Übersichtlichkeit wird die Erfindung nachfolgend grundsätzlich anhand von als Streulichtdetektoren ausgebildeten lokalen Detektormodulen beschrieben, die erläuterten Erfindungsausführungen sind aber alle auch mit als Durchlichtdetektoren ausgebildeten lokalen Detektormodulen oder einer Mischung realisierbar.

Bei einer vorteilhaften Weiterentwicklung der Erfindung sind das eine oder die mehreren lokalen Detektormodule jeweils innerhalb eines Strömungsquerschnitts der mindestens einen Rohr- und/oder Schlauchleitung und/oder innerhalb der Prüffluidströmung angeordnet.

Auf diese Weise kann eine besonders zuverlässige Erfassung von Streu- und/der Rauchpartikeln realisiert werden, da das eine oder die mehreren lokalen Detektormodule in der Prüffluidströmung selbst, z. B. im Mündungsbereich einer Ansaugöffnung oder sogar im Fluidleitungssystem, insbesondere einer Rohr- und/oder Schlauchleitung angeordnet sind. In letzterem Fall kann die Rohr- und/oder Schlauchleitung als strukturelle Begrenzung und/oder zur Befestigung des einen oder der mehreren lokalen Detektormodule verwendet werden. Der mindestens eine Lichtleiter, der mit dem einen oder den mehreren lokalen Detektormodulen verbunden ist verläuft vorzugsweise parallel zur oder sogar innerhalb der Rohr- und/oder Schlauchleitung.

Grundsätzlich ist es denkbar die Erfindung mit einem als Lichtwellenleiter oder Glasfaserkabel ausgeführten Lichtleiter mit einer einzelnen Lichtleitfaser umzusetzen. Besonders vorteilhaft ist aber eine beispielhafte Variante der Erfindung, bei der der mindestens eine Lichtleiter des Lichtleitsystems als Lichtwellenleiter oder Glasfaserkabel mit mindestens einer ersten Lichtleitfaser und mindestens einer zweiten Lichtleitfaser zur Übertragung von Licht und/oder Streulicht zwischen dem einen oder den mehreren lokalen Detektormodulen und der zentralen Analyseeinrichtung ausgebildet ist.

Beispielsweise ist die erste Lichtleitfaser zur Übertragung des am jeweiligen lokalen Detektormodul erfassten Streulichts zur zentralen Analyseeinrichtung vorgesehen, wohingegen die zweite Lichtleitfaser zur Übertragung von von einer beliebigen Lichtquelle stammendem Licht zu den jeweiligen lokalen Detektormodulen vorgesehen sein kann. Bei dieser Variante können das eine oder die mehreren lokalen Detektormodule unabhängig von den im jeweiligen Überwachungsbereich vorliegenden Lichtquellen bzw. vorherrschenden Lichtverhältnissen arbeiten, d. h. diese werden über die zweite Lichtleitfaser mit Licht "versorgt". Gleichzeitig kann das gegebenenfalls erfasste Streulicht und/oder Durchlicht über die erste Lichtleitfaser an die zentrale Analysevorrichtung weitergeleitet werden. Zur schnellen Lokalisierung eines erkannten Brands und/oder einer Brandentstehung sind jedem lokalen Detektormodul eine erste und eine zweite Lichtleitfaser zugeordnet. Alle ersten und alle zweiten Lichtleitfasern gemeinsam werden als Lichtleiter bezeichnet.

**In** Weiterbildung dieser Erfindungsvariante weisen das eine oder die mehreren lokalen Detektormodule jeweils ein erstes Faserende einer ersten Lichtleitfaser und ein zweites Faserende einer zweiten Lichtleitfaser auf, wobei das erste Faserende der ersten Lichtleitfaser und das zweite Faserende der zweiten Lichtleitfaser in einem bedarfsweise wählbaren Winkel zueinander ausgerichtet sind.

Über das zweite Faserende einer zweiten Lichtleifaser wird am jeweiligen lokalen Detektormodul Licht als Lichtstrahl in einen Detektionsbereich des Detektormoduls gesendet, das erste Faserende der ersten Lichtleitfaser ist ebenfalls auf den Detektionsbereich gerichtet und schließt mit dem zweiten Faserende einen festlegbaren Winkel, z. B. 120° ein, um das in diesem Winkel an im Detektionsbereich vorliegenden Streu- und/oder Rauchpartikeln gestreute Streulicht zu erfassen. Bei der Verwendung von Durchlichtdetektoren beträgt der Winkel 180°.

In einer alternativen oder optionalen Weiterbildung der vorangehend beschriebenen Erfindungsvariante weist die zentrale Analyseeinrichtung mindestens einen Lichtempfänger, insbesondere eine Photodiode (PD), zur Umwandlung des weitergeleiteten Streulichts und/oder Durchlichts, insbesondere in ein Strom- und/oder Spannungssignal, und insbesondere eine Lichtquelle, bspw. eine lichtemittierende Diode (LED) oder eine Laserdiode auf, wobei die mindestens eine erste Lichtleitfaser, insbesondere alle ersten Lichtleitfasern lichtleitend mit dem Lichtempfänger und die mindestens eine zweite Lichtleitfaser, insbesondere alle zweiten Lichtleitfasern, vorzugsweise lichtleitend mit der Lichtquelle verbunden sind.

Die Kombination aus Lichtquelle, insbesondere LED, mit Lichtempfänger, insbesondere PD, zur Umwandlung von Streulicht in ein weiter verarbeitbares Signal wird im Fachjargon auch als LWL-Detektormodul (Lichtwellenleiter-Detektormodul) bezeichnet. Indem das erfasste Streulicht insbesondere über eine Photodiode in ein Strom- und/oder Spannungssignal gewandelt wird, wird insbesondere eine softwaregestützte Auswertung ermöglicht. Durch Weiterleitung des Streulichts und/oder Durchlichts vom lokalen Detektormodul in Form eines Lichtsignals, wobei eine Umwandlung erst in der zentralen Analyseeinrichtung stattfindet, weist das Ansaugpartikelerkennungssystem ausschließlich passive Komponenten im Überwachungsbereich auf und ist folglich auch zur Verwendung in explosionsgefährdeter Atmosphäre geeignet. Gleichzeitig erfolgt die Signalübertragung vom lokalen Detektormodul zur zentralen Analyseeinrichtung mit Lichtgeschwindigkeit, nahezu ohne Zeitverzug. Im Falle mehrere Äste eines Fluidleitungssystem kann vorzugsweise für jeden Ast eine Lichtquelle und ein Lichtempfänger bzw. ein eigenes LWL-Detektormodul vorgesehen sein.

Erfindungsgemäß weist entweder die zentrale Analyseeinrichtung mindestens ein Modulationsmittel zur Modulation des von mindestens einer Lichtquelle gesendeten Lichts und zur Zuordnung des von mindestens einem Lichtempfänger erfassten Streulichts und/oder Durchlichts zu einem oder mehreren lokalen Detektormodulen auf oder der Lichtleiter umfasst jeweilige, den lokalen Detektormodulen zugeordnete erste und zweite Lichtleitfasern oder die lokalen Detektormodule sind entlang einer Rohr- und/oder Schlauchleitung des Fluidleitungssystems angeordnet und jeweils einer vorgegebenen Anzahl an Ansaugöffnungen zugeordnet, wobei an dem jeweiligen lokalen Detektormodul ein gewünschtes Verdünnungsverhältnis (Vᵢ) der Prüffluidströmung bedarfsweise festlegbar ist. Vorzugsweise weist jedes lokale Detektormodul einen individuell festlegbaren Abstand zur zentralen Analyseeinrichtung auf. Eine Modulation des von der Lichtquelle gesendeten Lichts ermöglicht daher die Identifizierung des jeweiligen Streu- und/oder Rauchpartikel erkennenden, d. h. Streulicht erfassenden lokalen Detektormoduls, wodurch sich wiederum der brandgefährdete Überwachungsbereich lokalisieren lässt. Das eingesetzte Grundprinzip ist zum Beispiel von laserbasierten Abstandsmessern bekannt. Ein entsprechender Lokalisierungseffekt kann bei einer anderen Erfindungsvariante durch den Einsatz von Polarisationsfiltern erreicht werden.

Insbesondere zur schnellen Lokalisierung eines Brandes oder einer Brandentstehung sind bei einer beispielhaften Ausgestaltung des erfindungsgemäßen Ansaugpartikelerkennungssystems zwei oder mehr lokale Detektormodule entlang der mindestens einen Rohr- und/oder Schlauchleitung angeordnet und die lokalen Detektormodule sind jeweils einer vorgegebenen Anzahl an Ansaugöffnungen in einem Bereich zwischen 1 und 5, vorzugsweise 3, zugeordnet.

Zweckmäßig sind die mindestens zwei lokalen Detektormodule des Lichtleitsystems wie auch die Ansaugöffnungen des Fluidleitungssystems entlang einer oder sogar innerhalb der die Prüffluidströmung führenden Rohr- und/oder Schlauchleitung in Reihe angeordnet. Durch die Zuordnung der lokalen Detektormodule zu einer oder mehreren der Ansaugöffnungen kann am jeweiligen Detektormodul ein gewünschtes Verdünnungsverhältnis der Prüffluidströmung festgelegt werden. Das Verdünnungsverhältnis ist dabei abhängig von der Anzahl der, vorzugsweise geometrisch identisch ausgebildeten Ansaugöffnungen, die die Prüffluidströmung entlang der Rohr- und/oder Schlauchleitung passiert. So liegt stromabwärts zu der in Strömungsrichtung ersten Ansaugöffnung ein Verdünnungsverhältnis der Prüffluidströmung von 1:1 vor, wohingegen das Verdünnungsverhältnis stromabwärts zu der in Strömungsrichtung dritten Ansaugöffnung bereits 1:3 beträgt. Abhängig davon, stromabwärts zu welcher Ansaugöffnung ein lokales Detektormodul angeordnet wird, kann folglich dessen individuelles Verdünnungsverhältnis festgelegt werden.

Das Verdünnungsverhältnis korreliert mit dem gestreuten Lichtanteil, also dem Streulicht und/oder dem Durchlicht. Bei Entnahme einer Streu- und/oder Rauchpartikel enthaltenden Prüffluidmenge, wird deren Verdünnung durch jede entlang der Rohr- und/oder Schlauchleitung entnommene weitere Prüffluidmenge erhöht, wobei der in der Prüffluidströmung enthaltene, volumenbezogene Streu- und/oder Rauchpartikelanteil und folglich der daran gestreute Streulichtanteil sinkt. Anhand des jeweils erfassten Streulichts und/oder Durchlichts an zwei oder mehr lokalen Detektormodulen mit jeweils bekanntem Verdünnungsverhältnis können so Rückschlüsse auf die örtliche und zeitliche Entstehung und/oder Ausbreitung eines Brandes und/oder einer Brandentstehung gezogen werden.

Vorzugsweise sind die mehreren lokalen Detektormodule gleichmäßig den entlang der Rohr- und/oder Schlauchleitung angeordneten Ansaugöffnungen zugeordnet, bspw. könnte alle drei oder alle vier Ansaugöffnungen ein lokales Detektormodul vorgesehen sein.

Um die Auswertung der von den einzelnen lokalen Detektormodulen erfassten Signale zu vereinfachen und diese, insbesondere unter Berücksichtigung der jeweiligen Verdünnungsverhältnisse, auswerten zu können, sind nach einer beispielhaften Erfindungsvariante die bedarfsweise festgelegten Verdünnungsverhältnisse, die an den jeweiligen lokalen Detektormodulen vorliegen, als Datensatz oder Datenmodell, insbesondere auf einer Speichereinheit, in der zentralen Analyseeinrichtung hinterlegt.

Besonders vorteilhaft sind die an den jeweiligen Detektormodulen individuell vorliegenden Verdünnungsverhältnisse Teil einer Expertensoftware bzw. eines Datenmodells über die geometrischen und strömungstechnischen Eigenschaften des Fluidleitungssystems.

Zum Beispiel zur redundanten Branderkennung sieht eine vorteilhafte Erfindungsausgestaltung vor, dass die zentrale Analyseeinrichtung mindestens ein fluiddurchströmtes, zentrales Streulichtdetektormodul aufweist, das fluidleitend mit dem Fluidleitungssystem, insbesondere mit der mindestens einen Rohr- und/oder Schlauchleitung, verbunden ist und zur zentralen Erfassung von an Streu- und/oder Rauchpartikeln, die in der Prüffluidströmung enthalten sind, gestreutem Streulicht ausgebildet ist.

Zur Detektion von Streulicht und zur Umwandlung des detektierten Streulichts in ein auswertbares Strom- und/oder Spannungssignal, sind grundsätzlich die lokalen Detektormodule zusammen mit dem in der zentralen Analyseeinrichtung angeordneten Lichtempfänger zur Erkennung eines Brands völlig ausreichend. Indem ein fluiddurchströmtes, zentrales Streulichtdetektormodul, im Stand der Technik auch unter der Bezeichnung RAS-Detektormodul (RAS = Rauchansaugsystem) bekannt, zusätzlich vorgesehen ist, wird eine redundante Überwachung sowie eine Verifizierung der von den lokalen Detektormodulen erfassten Streu- und/oder Rauchpartikeln ermöglicht. Vorzugsweise ist das zentrale Streulichtdetektormodul in Prüffluidströmungsrichtung nach der letzten Ansaugöffnung bzw. unmittelbar vor der Ansaugeinrichtung angeordnet. Pro Fluidleitungssystem eines Ansaugpartikelerkennungssystems - auch wenn dieses mehrere Äste aufweist - ist typischerweise ein zentrales Streulichtdetektormodul zur Erkennung von Streu- und/oder Rauchpartikeln (auch aus den jeweiligen Ästen) vorgesehen und als Bestandteil der zentralen Analysevorrichtung in diese integriert. Alternativ ist es aber auch denkbar, jedem Ast eines Fluidleitungssystems ein eigenes zentrales Streulichtdetektormodul zuzuordnen, die in diesem Fall im Schlauch- und/oder Rohrsystem, dem entsprechenden Ast zugeordnet, angeordnet sind.

Schließlich weist die zentrale Analyseeinrichtung nach einer beispielhaften Erfindungsausgestaltung eine Recheneinheit, insbesondere einen Prozessor, auf, die zur Auswertung des von dem einen oder den mehreren lokalen Detektormodulen erfassten Streulichts und/oder Durchlichts und/oder zur Auswertung des von dem fluiddurchströmten, zentralen Streulichtdetektormoduls erfassten Streulichts und/oder zur Korrelation mit den als Datensatz hinterlegten Verdünnungsverhältnissen ausgebildet ist.

Vorzugsweise ist die Recheneinheit hierzu mit dem mindestens einen Lichtempfänger und/oder dem zentralen, fluiddurchströmten Streulichtdetektormodul signalübertragend verbunden. Die Recheneinheit ist vorzugsweise außerdem mit einer Speichereinheit signalübertragend verbunden, auf der insbesondere ein Datenmodell als Teil eines Expertensystems über die geometrischen und strömungstechnischen Eigenschaften des Fluidleitungssystems und/oder über die bei jeweiligen lokalen Detektormodulen vorliegenden Verdünnungsverhältnisse der Prüffluidströmung hinterlegt ist. Selbstverständlich können auf der Speichereinheit auch verschiedene Programmabläufe bzw. Verfahren zur Partikelerkennung, insbesondere zum Erkennen und/oder Lokalisieren eines Brandes /oder einer Brandentstehung hinterlegt sein.

Insofern wird die eingangs gestellte Erfindungsaufgabe auch durch ein Verfahren zum Erkennen und Lokalisieren eines Brandes und/oder einer Brandentstehung in einem oder mehreren Überwachungsbereichen gelöst, welches mit einem Ansaugpartikelerkennungssystem nach einer der zuvor beschriebenen Ausführungen durchgeführt wird. Bei dem erfindungsgemäßen Verfahren wird in einem ersten Schritt eine jeweilige Prüffluidmenge über ein Fluidleitungssystem mit mindestens einer Rohr- und/oder Schlauchleitung und einer oder mehreren, jeweils in einen Überwachungsbereich mündenden Ansaugöffnungen aus dem einen oder den mehreren Überwachungsbereichen entnommen. In einem zweiten Schritt durchströmt die aus dem einen oder den mehreren Überwachungsbereichen entnommene Prüffluidmenge als Teil einer Prüffluidströmung eines oder mehrere, lokale Detektormodule, die jeweils einer oder mehreren Ansaugöffnungen zugeordnet sind.

Die Prüffluidströmung wird vorzugsweise durch Betrieb einer der am Ende der Rohr- und/oder Schlauchleitung angeordneten Ansaugeinrichtung erzeugt. Indem die Ansaugöffnungen in die Überwachungsbereiche münden, wird die jeweils darin enthaltene Atmosphäre, insbesondere Luft, in Form einer jeweiligen Prüffluidmenge entnommen und als Bestandteil der Prüffluidströmung in Richtung der Ansaugeinrichtung transportiert. Hierbei passiert die über eine bestimmte Ansaugöffnung entnommene Prüffluidmenge alle weiteren stromabwärts zu dieser Ansaugöffnung, entlang der Rohr- und/oder Schlauchleitung bis hin zur Ansaugeinrichtung, angeordneten lokalen Detektormodule.

**In** einem dritten Schritt wird Streulicht, das an in der Prüffluidströmung und/oder in dem jeweiligen Überwachungsbereich enthaltenen Streu- und/oder Rauchpartikeln gestreut wird und/oder die Streu- und/oder Rauchpartikel passierendes Durchlicht von dem einen oder den mehreren durchströmten, lokalen Detektormodulen erfasst und in einem vierten Schritt das jeweils erfasste Streulicht und/oder Durchlicht über mindestens einen Lichtleiter an eine zentrale Analyseeinrichtung weitergeleitet.

Zusammen mit den Prüffluidmengen können über eine Ansaugöffnung auch in dem Überwachungsbereich enthaltene Streu- und/oder Rauchpartikel entnommen werden, welche dann die stromabwärts zu dieser Ansaugöffnung angeordneten lokalen Detektormodule passieren. Sofern ein lokales Detektormodul als Streulichtdetektor ausgebildet ist, wird an den Streu- und/oder Rauchpartikeln gestreutes Streulicht erfasst und als Streulichtsignal zur Auswertung durch die zentrale Analyseeinrichtung weitergeleitet. Sofern ein lokales Detektormodul als Durchlichtdetektor ausgebildet ist, wird das die Streu- und/oder Rauchpartikel passierende Durchlicht erfasst und als Durchlichtsignal zur Auswertung durch die zentrale Analyseeinrichtung weitergeleitet.

**In** einem fünften Schritt wird das weitergeleitete Streulicht und/oder Durchlicht mittels der zentralen Analyseeinrichtung zum Erkennen eines Brandes und/oder einer Brandentstehung ausgewertet und/oder zur Lokalisierung eines Brandes und/oder einer Brandentstehung dem oder den jeweiligen lokalen Detektormodulen zugeordnet.

Vorzugsweise weist die zentrale Analyseeinrichtung einen Lichtempfänger auf, der die weitergeleiteten Streulichtsignale in zugehörige Strom- und/oder Spannungssignale umwandelt, eine Recheneinheit gleicht die umgewandelten Signale mit hinterlegten Datenmodellen ab, wodurch ein Brand und/oder eine Brandgefahr erkennbar ist. Eine Zuordnung kann beispielsweis durch die Verwendung eines gespliceten Lichtleiters und einer Modulation des von einer Lichtquelle gesendeten Lichts erfolgen. Weitere Lokalisierungsmöglichkeiten sind die Verwendung von Polarisationsmitteln, wie Polfiltern oder eine Zuordnung direkt anhand der das Lichtsignal weiterleitenden ersten Lichtleitfaser. Die beschriebenen Verfahrensschritte werden zur Brandüberwachung kontinuierlich wiederholt und laufen im Wesentlichen zeitgleich ab. Bei Erkennen eines Brands und/oder einer Brandentstehung kann, insbesondere mittels der Recheneinheit, eine entsprechende Meldung, bspw. in Form eines Warnhinweises oder Alarms ausgegeben werden.

Nach einer vorteilhaften Verfahrensvariante wird ein Brand und/oder eine Brandentstehung erkannt, sofern das von zumindest einem lokalen Detektormodul erfasste und an die zentrale Analyseeinrichtung weitergeleitete Streulicht eine dort hinterlegte Alarmschwelle überschreitet.

Alternativ wird, bei Verwendung von als Durchlichtdetektoren ausgebildeten lokalen Detektormodulen, ein Brand und/oder eine Brandentstehung erkannt, sofern das von zumindest einem lokalen Detektormodul erfasste und an die zentrale Analyseeinrichtung weitergeleitete Durchlicht eine dort, insbesondere für das jeweilige lokale Detektormodul individuell hinterlegte Alarmschwelle unterschreitet.

Durch die nahezu augenblicklich erfolgende Weiterleitung der Streulicht- und/oder Durchlichtsignale kann mittels des Lichtleitsystems eine "schnelle Brandmeldung" wesentlich früher erfolgen als bei Überwachung allein mit einem Ansaugpartikelerkennungssystem, bei dem die Transportzeit einer Prüffluidmenge bis zur zentralen Analyseeinrichtung bspw. 60 Sekunden beträgt.

Vorteilhaft sieht eine Verfahrensvariante der Erfindung vor, dass das erfasste und weitergeleitete Streulicht und/oder Durchlicht dem oder den jeweiligen lokalen Detektormodulen zugeordnet wird, indem ein in der zentralen Analyseeinrichtung, insbesondere auf einer Speichereinheit, hinterlegter Datensatz mit für die jeweiligen lokalen Detektormodule festgelegten Verdünnungsverhältnissen mit dem weitergeleiteten Streulicht und/oder Durchlicht, vorzugsweise mit der Streulichtintensität und/oder Durchlichtintensität, insbesondere in der Recheneinheit oder dem Prozessor korreliert wird.

Die den einzelnen Überwachungsbereichen zugeordneten Ansaugöffnungen sind zweckmäßigerweise entlang der Rohr- und/oder Schlauchleitung in Reihe geschaltet, wodurch die Verdünnung der Prüffluidströmung in Richtung der Ansaugeinrichtung zunimmt. Das heißt pro Volumen Prüffluid sind weniger Rauchpartikel enthalten, weshalb auch gleichzeitig der Anteil an daran gestreutem Streulicht abnimmt bzw. im Falle von Durchlichtdetektoren der Anteil an die Rauchpartikel passierendem Durchlicht zunimmt. Indem die geometrischen und strömungstechnischen Daten, zusammen mit den zugeordneten Verdünnungsverhältnissen der lokalen Detektormodule als Datensatz oder Datenmodell in der Recheneinheit hinterlegt werden, kann dieser Zusammenhang zur Zuordnung und Lokalisierung eines Brandes und/oder einer Brandentstehung genutzt werden.

Zur Reduzierung der Wahrscheinlichkeit eines Fehlalarms, z. B. aufgrund von Täuschungsgrößen oder Ähnlichem, durchströmen im Rahmen einer "Plausibilitätsprüfung" nach einer beispielhaften Verfahrensvariante die aus dem einen oder den mehreren Überwachungsbereichen jeweils entnommenen Prüffluidmengen als Prüffluidströmung ein zentrales Streulichtdetektormodul und das von dem zentralen Streulichtdetektormodul erfasste Streulicht wird mit dem von dem einen oder den mehreren lokalen Detektormodulen erfassten Streulicht und/oder Durchlicht verglichen.

Besonders vorteilhaft ist es hierzu, die von den einzelnen lokalen Detektormodulen erfassten und weitergeleiteten Signale, vorzugsweise die Signalstärke, über einen vorgegebenen Zeitraum hinweg, als zeitlichen Verlauf auf der Recheneinheit, insbesondere auf deren Speichereinheit zu speichern. Ein solcher zeitlicher Verlauf der Signalstärke kann bspw. während der Transportzeit, die die Prüffluidströmung benötigt, um von einer Ansaugöffnung zur zentralen Analyseeinrichtung zu gelangen erstellt werden. Sobald das in der zentralen Analyseeinrichtung angeordnete zentrale Streulichtdetektormodul eine Brand und/oder eine Brandgefahr anhand von in der Prüffluidströmung enthaltenen Rauchpartikeln erkennt, können die vom zentralen Streulichtdetektormodul übermittelten Daten mit dem gespeicherten Datensatz der lokalen Detektormodule verglichen und ausgewertet werden.

Zusätzlich oder optional können im Rahmen der Plausibilitätsprüfung auch die von dem zentralen Streulichtdetektormodul übermittelten Signale und/oder Daten, die von den lokalen Detektormodulen übermittelten Signale und/oder Daten, deren zeitlicher Verlauf, sowie die auf der Speichereinheit hinterlegten Datensätze und/oder Datenmodelle über die geometrischen und/oder strömungstechnischen Eigenschaften des Fluidleitungssystems, insbesondere die Verdünnungsverhältnisse, z. B. anhand von Erkennungsmustern miteinander verglichen und/oder korreliert werden, um so die Auswertemöglichkeiten und hierdurch insbesondere die Ausfallsicherheit und die Erkennungsgenauigkeit des erfindungsgemäßen Ansaugpartikelsystems erheblich zu erhöhen.

Zur Wartung oder zur Überprüfung der Funktionsfähigkeit eines Ansaugpartikelerkennungssystems können bei einer beispielhaften Variante des erfindungsgemäßen Verfahrens Testpartikel, insbesondere als Testaerosol, in einem oder mehreren der Überwachungsbereiche freigesetzt werden, wobei die lokalen Detektormodule im dritten Schritt das an den Testpartikeln gestreute Streulicht und/oder das die Testpartikel passierende Durchlicht erfassen.

Vorzugsweise können durch die Freisetzung der Testpartikel, die insbesondere in einem Testaerosol enthalten sind, etwaige Verschmutzungen und/oder Verstopfungen von Ansaugöffnungen lokalisiert werden. Hierzu können wiederum die als Datenmodell oder Datensatz hinterlegten Verdünnungsverhältnisse der lokalen Detektormodule, die den jeweiligen Überwachungsbereichen zugeordnet sind in die Auswertung des erfassten Streulichts und/oder Durchlichts mit einbezogen werden. Eine Verschmutzung und/oder Verstopfung einer Ansaugöffnung bedingt, eine Verringerung der aus dem zugeordneten Überwachungsbereich entnommenen Prüffluidmenge, wodurch wiederum das Verdünnungsverhältnis der am lokalen Detektormodul vorliegenden Prüffluidströmung geringer und in der Folge der erfasste Streulichtanteil höher oder der erfasste Durchlichtanteil geringer als im hinterlegten Datensatz oder Datenmodell ausfällt. Durch Vergleich mit dem hinterlegten Datensatz oder Datenmodell kann die verstopfte und/oder verschmutzte Ansaugöffnung lokalisiert werden.

Weitere Einzelheiten, Merkmale, Merkmals(unter)-kombinationen, Vorteile und Wirkungen auf der Basis der Erfindung ergeben sich aus der nachfolgenden Beschreibung eines bevorzugter Ausführungsbeispiele der Erfindung und den Zeichnungen. Diese zeigen in
Fig. 1 eine schematische Darstellung einer beispielhaften Ausführungsform eines erfindungsgemäßen Ansaugpartikelerkennungssystems mit einer zentralen Analyseeinrichtung,
Fig. 2 eine schematische Darstellung einer ersten beispielhaften Ausführungsform eines lokalen Detektormoduls,
Fig. 3 eine schematische Darstellung der ersten beispielhaften Ausführungsform des lokalen Detektormoduls aus Figur 2 mit Polfiltern,
Fig. 4 eine schematische Darstellung einer zweiten beispielhaften Ausführungsform eines lokalen Detektormoduls,
Fig. 5 eine schematische Darstellung der zweiten beispielhaften Ausführungsform des lokalen Detektormoduls aus Figur 4 mit Polfiltern,
Fig. 6 eine schematische Darstellung einer zentralen Analyseeinrichtung für ein erfindungsgemäßes Ansaugpartikelerkennungssystem,
Fig. 7 ein schematisches Diagramm eines beispielhaften Signalstärkenverlaufs für ein "Frischluftsignal",
Fig. 8 ein schematisches Diagramm eines beispielhaften Signalstärkenverlaufs für ein "Brandmuster",
Fig. 9 ein schematisches Diagramm eines beispielhaften Signalstärkenverlaufs für eine "Täuschungsgröße",
Fig. 10 ein schematisches Diagramm eines beispielhaften Signalstärkenverlaufs für ein "Verschmutzungsmuster"
Fig. 11 ein Flussdiagramm einer ersten beispielhaften Variante des erfindungsgemäßen Verfahrens zum Erkennen und/oder Lokalisieren eines Brandes und/oder einer Brandentstehung in einem oder mehreren Überwachungsbereichen,
Fig. 12 ein Flussdiagramm einer zweiten beispielhaften Variante des erfindungsgemäßen Verfahrens,
Fig. 13 ein Flussdiagramm einer dritten beispielhaften Variante des erfindungsgemäßen Verfahrens und
Fig. 14 eine schematische Darstellung zur Durchführung einer Plausibilitätsprüfung.

Die Figuren sind lediglich beispielhafter Natur und dienen nur dem Verständnis der Erfindung. Die gleichen Elemente sind mit denselben Bezugszeichen versehen und werden in der Regel auch nur einmal beschrieben.

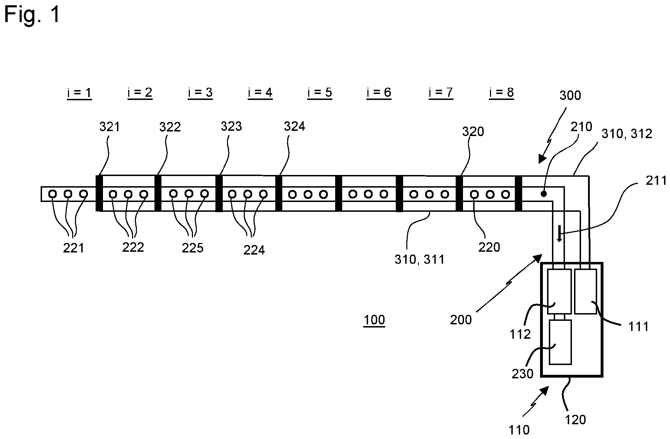

Der Figur 1 ist eine schematische Darstellung einer beispielhaften Ausführungsform eines erfindungsgemäßen Ansaugpartikelerkennungssystems 100 zu entnehmen. In der dargestellten Ausführungsform weist das Ansaugpartikelerkennungssystem 100 als wesentliche Bestandteile eine zentrale Analyseeinrichtung 110, ein Fluidleitungssystem 200 und ein Lichtleitsystem 300 auf. Das Fluidleitungssystem 200 umfasst eine Rohr- und/oder Schlauchleitung 210 (einen Ast), deren erstes Ende fluidleitend mit einer Ansaugeinrichtung 230, z. B. einem Lüfter verbunden ist. Die Ansaugeinrichtung 230 ist in einem Gehäuse 120 der zentralen Analyseeinrichtung 110 angeordnet. Entlang der Rohr- und/oder Schlauchleitung 210 sind eine Vielzahl von Ansaugöffnungen 220 ausgebildet, die in jeweils zugeordnete, hier insgesamt acht Überwachungsbereiche i = 1-8 münden. In der beispielhaft dargestellten Ausführungsform sind jedem Überwachungsbereich 1-8 jeweils drei Ansaugöffnungen 220 zugeordnet. Insgesamt weist die Rohr- und/oder Schlauchleitung 210 somit 24 Ansaugöffnungen 220 auf. Die Anzahl der Ansaugöffnungen 220 pro Überwachungsbereich 1-8 kann selbstverständlich auch abweichen und richtet sich bspw. nach der Größe des zugeordneten Überwachungsbereichs 1-8. Im Betrieb erzeugt die Ansaugeinrichtung 230 eine entlang der Rohr- und/oder Schlauchleitung 210 in Richtung der Ansaugeinrichtung 230 gerichtete Prüffluidströmung 211, wobei mittels der Ansaugöffnungen 220 aus den zugeordneten Überwachungsbereichen 1-8 kontinuierlich eine Prüffluidmenge entnommen wird. Die zentrale Analyseeinrichtung 110 umfasst in dieser Ausführung ein grundsätzlich optionales, zentrales Streulichtdetektormodul 112, welches stromaufwärts zur Ansaugeinrichtung 230 angeordnet ist. Mittels des zentralen Streulichtdetektormoduls 112 können in der Prüffluidströmung 211 enthaltene Streu- und/oder Rauchpartikel erfasst werden, die als Bestandteil einer jeweiligen Prüffluidmenge aus einem oder mehreren der Überwachungsbereiche 1-8 entnommen wurden. Ein typischer Wert für die Transportzeit einer Prüffluidmenge entlang der gesamten Rohr- und/oder Schlauchleitung 210 bis zum zentralen Streulichtdetektormodul 112 beträgt in dieser Ausführung bspw. 60 Sekunden. Das zentrale Streulichtdetektormodul 112 ist vorzugsweise als RAS-Detektormodul ausgebildet. RAS-Detektormodule sind aus dem Stand der Technik bekannt und werden üblicherweise in Ansaugpartikelerkennungssystemen 100 verwendet.

Das in der Figur 1 gezeigte beispielhafte Ansaugpartikelerkennungssystem 100 verfügt ferner über ein Lichtleitsystem 300 mit einem Lichtleiter 310, welcher eine Anzahl an lokalen Detektormodulen 320 lichtleitend mit einem Lichtempfänger 111, insbesondere in einem LWL-Detektormodul, der zentralen Analyseeinrichtung 110 verbindet. LWL-Detektormodule sind aus dem Stand der Technik bekannt und werden insbesondere zur lokal begrenzten Brandüberwachung von Geräten verwendet. Der Lichtleiter 310 umfasst hier mindestens eine erste Lichtleitfaser 311, die zur Weiterleitung von an einem oder mehreren der lokalen Detektormodulen 320 erfasstem Licht bzw. Streulicht und/oder Durchlicht zu dem Lichtempfänger 111 vorgesehen ist. Die Übertragung des an den lokalen Detektormodulen 320 erfassten Lichts bzw. Streulichts und/oder Durchlichts zu dem Lichtempfänger 111 erfolgt mit Lichtgeschwindigkeit nahezu augenblicklich. Mindestens eine zweite Lichtleitfaser 312 ist zur Übertragung von aus einer Lichtquelle 113, insbesondere von einem LWL-Detektormodul, stammendem Licht zu den jeweiligen lokalen Detektormodulen 320 vorgesehen. Die lokalen Detektormodule 320 sind in dieser Ausführung jeweils drei Ansaugöffnungen 220 eines jeweiligen Überwachungsbereichs 1-8 zugeordnet und in Strömungsrichtung der Prüffluidströmung 211 stromabwärts zu dem entsprechenden Überwachungsbereich 1-8 innerhalb der Rohr- und/oder Schlauchleitung 210 angeordnet.

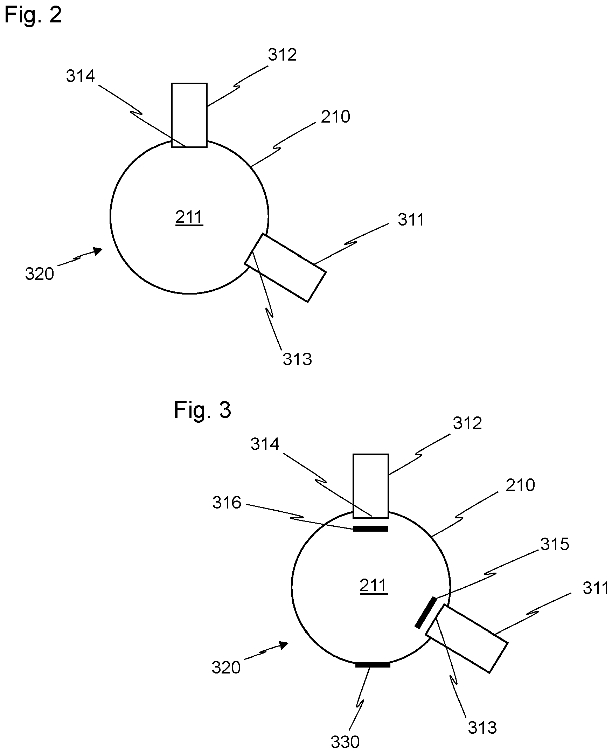

In der Figur 2 ist eine schematische Darstellung einer ersten beispielhaften Ausführungsform eines lokalen Detektormoduls 320 gezeigt. Das lokale Detektormodul ist beispielsweise gemäß der Figur 1 innerhalb der Rohr- und/oder Schlauchleitung 210 des Fluidleitungssystems 200 ausgebildet. Ein zweites Faserende 314 der zweiten Lichtleitfaser 312 ist derart an der Rohr- und/oder Schlauchleitung 210 befestigt, sodass über das zweite Faserende 314 von der zweiten Lichtleitfaser 312 übertragenes Licht in den Strömungsquerschnitt der Rohr- und/oder Schlauchleitung 210 gesendet wird und dort einen die Prüffluidströmung 211 überschneidenden Detektionsbereich ausbildet. Ein erstes Faserende 313 der ersten Lichtleitfaser 311 ist ebenfalls an der Rohr- und/oder Schlauchleitung 210 befestigt und auf den Detektionsbereich gerichtet. Das erste Faserende 313 und das zweite Faserende 314 sind in einem gewünschten Winkel, hier ca. 120°, zueinander ausgerichtet, sodass das erste Faserende 313 in diesem Winkel gestreutes Streulicht erfasst.

Die beispielhafte Ausführungsform der Figur 2 ist auch in der Figur 3 schematisch dargestellt. Zusätzlich sind hier ein zweiter Polfilter 316 vor dem zweiten Faserende 314 zur Polarisation des gesendeten Lichts bzw. ein erster Polfilter 315 vor dem ersten Faserende 313 zur Polarisation des zu erfassenden Streulichts angeordnet. Dem zweiten Polfilter 316 gegenüberliegend ist ein Absorber 330 an der Innenwandung der Rohr- und/oder Schlauchleitung 210 vorgesehen, der nicht gestreutes, insbesondere polarisiertes Licht absorbiert. Durch die Polarisation von Licht bzw. Streulicht in einzelnen lokalen Detektormodulen 320 wird durch Auswertung der weitergeleiteten Lichtsignale eine lokale Zuordnung der detektierten Streu- und/oder Rauchpartikel und somit eines möglichen Brands und/oder einer Brandentstehung vereinfacht.

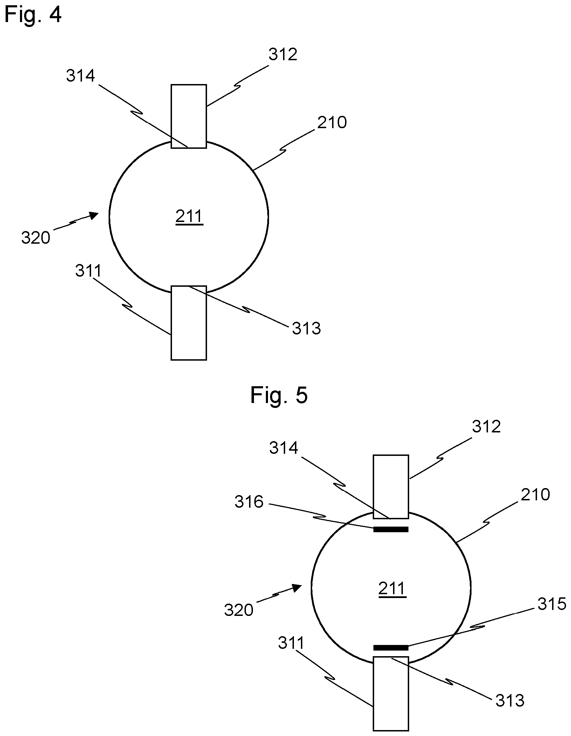

Die Figuren 4 und 5 zeigen schematisch eine zweite beispielhafte Ausführungsform eines lokalen Detektormoduls 320, welches als Durchlichtdetektor ausgebildet ist. Grundsätzlich lassen sich alle beispielhaften Ausführungen der Erfindung auch mit einem solchen Durchlichtdetektor realisieren, welcher anstelle der zumeist beschriebenen und als Streulichtdetektor ausgebildeten lokalen Detektormodule 320 eingesetzt wird. In der Durchlichtdetektor-Variante sind das erste Faserende 313 und das zweite Faserende 314 einander gegenüberliegend bzw. in einem Winkel von 180° zueinander ausgerichtet, sodass das erste Faserende 313 das nicht an Streu- und/oder Rauchpartikeln gestreute Durchlicht erfasst. **In** der Figur 5 ist die zweite beispielhafte Ausführungsform (entsprechend der Figur 3) mit einem ersten Polfilter 315 und einem zweiten Polfilter 316 ausgebildet.

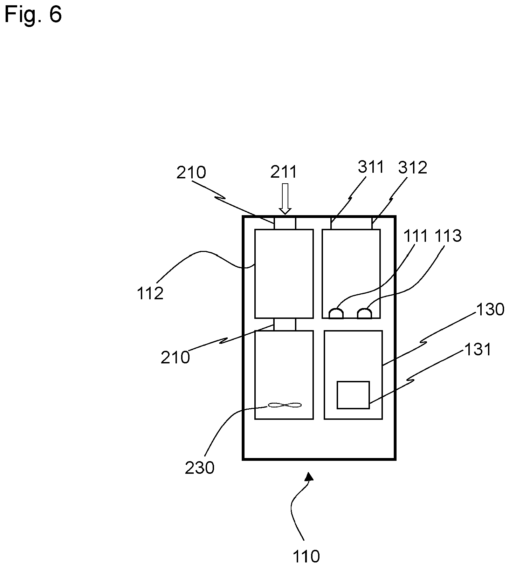

Eine schematische Darstellung einer zentralen Analyseeinrichtung 110 für eine Ausführung eines erfindungsgemäßen Ansaugpartikelerkennungssystems 100, zum Beispiel gemäß der Figur 1, ist in der Figur 6 gezeigt. Die zentrale Analyseeinrichtung 110 umfasst gemäß dieser Ausführungsform eine Ansaugreinrichtung 230, insbesondere einen Lüfter, die mit einer Rohr- und/oder Schlauchleitung 210 des Fluidleitungssystems 200 des Ansaugpartikelerkennungssystems 100 fluidleitend verbunden ist und zur Erzeugung der Prüffluidströmung 211 vorgesehen ist. In Strömungsrichtung der Prüffluidströmung 211 ist stromaufwärts zu der Ansaugeinrichtung 230 und ebenfalls fluidleitend mit der Rohr- und/oder Schlauchleitung 210 verbunden, das zentrale Streulichtdetektormodul 112 angeordnet, das in der Prüffluidströmung enthaltene Streu- und/oder Rauchpartikel erfasst und die erfassten Lichtsignale zur weiteren Auswertung in Strom- und/oder Spannungssignale umwandelt. Zur Umwandlung von über die mindestens eine erste Lichtleitfaser 311 des Lichtleiters 310 weitergeleiteten Lichtsignalen in Strom- und/oder Spannungssignale ist ein vorzugsweise als Photodiode ausgebildeter Lichtempfänger 111 als Bestandteil der zentralen Analyseeinrichtung 110 vorgesehen. Der Lichtempfänger 111 ist gemäß der dargestellten Ausführung Teil eines LWL-Detektormoduls, welches außerdem einen Lichtsender bzw. eine Lichtquelle 113, vorzugsweise eine Leuchtdiode aufweist. Das von der Lichtquelle 113 emittierte Licht wird über die mindestens eine zweite Lichtleitfaser 312 als Lichtsignal zu den jeweiligen lokalen Detektormodulen 320 geleitet. Indem die Umwandlung der jeweiligen Lichtsignale erst innerhalb der zentralen Analyseeinrichtung 110 erfolgt, sind alle aktiven bzw. stromführenden Komponenten des Ansaugpartikelerkennungssystems 100 zentral und außerhalb der jeweiligen Überwachungsräume 1-8 angeordnet. Bei den in den Überwachungsräumen 1-8 angeordneten Komponenten des Ansaugpartikelerkennungssystems 100 handelt es sich ausschließlich um passive Bauteile, wodurch eine Verwendung auch in explosionsgefährdeter Atmosphäre ermöglicht wird.

Ferner umfasst die zentrale Analyseeinrichtung 110 eine programmierbare Recheneinheit 130 mit einer Speichereinheit 131, die zur Aufzeichnung und Auswertung der vom Lichtempfänger 111, insbesondere vom LWL-Detektormodul sowie vom zentralen Streulichtdetektormodul 112, insbesondere RAS-Detektormodul übermittelten Signale mit diesen signalleitend verbunden ist. Die Recheneinheit 130 ist hierzu mit einer, insbesondere auf der Speichereinheit 131 hinterlegten Expertensoftware ausgestattet. Auf der Speichereinheit 131 sind darüber hinaus verschiedene Programmabläufe zur Durchführung eines Verfahrens zum Erkennen und/oder Lokalisieren eines Brandes und/oder einer Brandentstehung in einem oder mehreren der Überwachungsbereiche 1-8 implementiert. Die Erfassung und/oder Lokalisierung eines Brandes und/oder einer Brandentstehung wird mittels der Expertensoftware anhand hinterlegter Datenmodelle, die u. a. die an den jeweiligen lokalen Detektormodulen 320 individuell vorliegenden Verdünnungsverhältnisse Vᵢ sowie die geometrischen und strömungstechnischen Eigenschaften des Ansaugpartikelerkennungssystems 100, insbesondere des Fluidleitungssystems 200 enthalten.

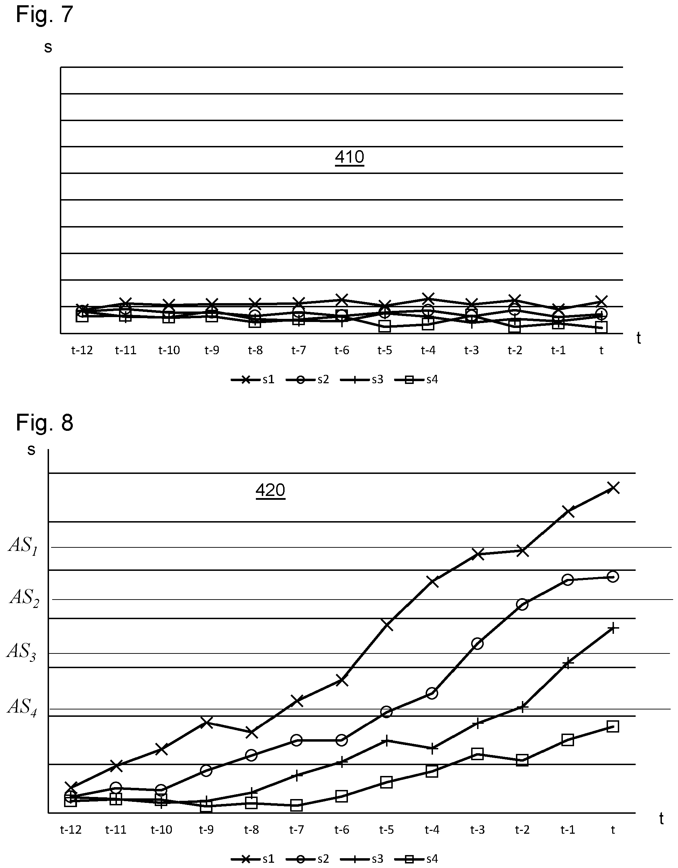

Die Figuren 7-10 zeigen auf der Recheneinheit 130, insbesondere der Speichereinheit 131, hinterlegte Datenmodelle zur Erkennung sowie zur Lokalisierung eines Brandes und/oder einer Brandentstehung. Die hinterlegten Datenmodelle können empirisch ermittelt werden und beruhen auf den geometrischen Daten des Fluidleitungssystems 200, insbesondere den Abständen der Ansaugöffnungen 220 zueinander, den strömungstechnischen Eigenschaften, bspw. Strömungsgeschwindigkeit und/oder Volumenstrom der Prüffluidströmung sowie den an den jeweiligen lokalen Detektormodellen 320 individuell vorliegenden Verdünnungsverhältnisses Vᵢ. Die gezeigten Diagrammverläufe beziehen sich jeweils beispielhaft auf die Auswertung des vom ersten lokalen Detektormodul 321, welches dem ersten Überwachungsbereich 1 zugeordnet ist, erfassten Prüffluids.

In der Figur 7 ist ein typischer Verlauf eines "Frischluftsignals" 410 über einen Zeitraum mit hier beispielhaft 13 Messzeitpunkten t-12 bis t aufgetragen. Im Diagramm ist jeweils ein zeitlicher Verlauf der Signalstärke sᵢ aus den bezüglich der Strömungsrichtung der Prüffluidströmung 211 (s. Figur 1) ersten vier Überwachungsbereiche i = 1-4 gezeigt. Jedem Überwachungsbereich 1-4 ist ein lokales Detektormodul 321, 322, 323, 324 zugeordnet, die aufgetragenen Signalstärken s₁ - s₄ entsprechen dem am lokalen Detektormodul 321-324 jeweils erfassten Streulichtsignal bzw. dem sich durch Umwandlung mittels des Lichtempfängers 111 daraus ergebenden Strom- und/oder Spannungssignals und sind in der Figur 7 rein schematisch aufgetragen. Ein Frischluftsignal 410 für z. B. den Überwachungsbereich 1 liegt dann vor, sofern in diesem Bereich keine Rauchpartikel erfasst werden und die gemessene Signalstärke s₁ über den vorgebebenen Messzeitraum t-12 bis t konstant ist. Der Messzeitraum t-12 bis t kann u. a. auf der Transportzeit einer Prüffluidmenge durch das Fluidleitungssystem 200 basieren. Aufgrund der Lichtverhältnisse und/oder Streuung an sonstigen Streupartikeln wie bspw. Staub weist die Signalstärke sᵢ stets einen Grundwert größer 0 auf. Das dem ersten Überwachungsbereich 1 zugeordnete lokale Detektormodul 321 ist, wiederum gemäß der Figur 1, stromabwärts bezüglich der im ersten Überwachungsbereich 1 angeordneten drei Ansaugöffnungen 221 positioniert und weist folglich ein Verdünnungsverhältnis V₁ von 1:3 auf. In der praktischen Umsetzung entspricht ein Überwachungsbereich i üblicherweise jeweils einem Raum oder auch einem Teilbereich eines Raums eines Gebäudes. Im Brandfall oder bei Brandgefahr in einem, z. B. dem ersten Überwachungsbereich 1 entsprechenden Raum oder Teilbereich des Raums werden die lokal entstehenden Rauchpartikel lediglich von der nächstgelegenen Ansaugöffnung 221 erfasst, wohingegen die übrigen zwei Ansaugöffnungen 221 weiterhin Frischluft ansaugen. Dies führt zu einer Verdünnung der die angesaugten Rauchpartikel enthaltenden Prüffluidmenge entlang der Rohr- und/oder Schlauchleitung 210, wodurch am Detektormodul 321 bereits das Verdünnungsverhältnis V₁ von 1:3 vorliegt. Zwischen den lokalen Detektormodulen 321-324 liegen jeweils drei weitere, den jeweiligen Überwachungsbereichen 2-4 zugeordnete Ansaugöffnungen 222, 223, 224, weshalb das Verdünnungsverhältnis V₂ am dem zweiten Überwachungsbereich 2 zugeordneten lokalen Detektormodul 322, 1:6, das Verdünnungsverhältnis V₃ am dem dritten Überwachungsbereich 3 zugeordneten lokalen Detektormodul 323 1:9 und das Verdünnungsverhältnis V₄ am dem vierten Überwachungsbereich 4 zugeordneten lokalen Detektormodul 324 1:12 beträgt. Entsprechend zeigen die einzelnen lokalen Detektormodule 321-324 eine entlang der Rohr- und/oder Schlauchleitung 210 abnehmende Signalstärke s₁-s₄. Bei Verwendung von als Durchlichtdetektoren ausgebildeten lokalen Detektormodulen 320 liegt der Grundwert der Signalstärke sᵢ durch die kontinuierliche Erfassung des Durchlichts (s. Figuren 4 und 5) entsprechend höher.

Ein jeweiliger zeitlicher Verlauf der Signalstärken s₁-s₄ eines "Brandmusters" 420 ist der Figur 8 zu entnehmen. Bereits zum Zeitpunkt t-11 zeigt sich am ersten lokalen Detektormodul 321 eine erhöhte Signalstärke s₁, die über die übrigen Messzeitpunkte t-10 bis t weiter zunimmt. Wegen der Transportzeit entlang der Rohr- und/oder Schlauchleitung 210 zeigt sich der Anstieg der Signalstärken s₂-s₄ an den lokalen Detektormodulen 321-324 zeitlich versetzt. Zum Zeitpunkt t-1 überschreitet die gemessene Signalstärke s₁ eine im Datenmodell hinterlegte und für das erste lokale Detektormodul spezifische Alarmschwelle AS₁. Die Alarmschwellen AS₂-AS₄ der übrigen lokalen Detektormodule 322-324 liegen entsprechend der höheren Verdünnungsverhältnisse V₂-V₄ darunter. Umgekehrt wäre bei Verwendung von als Durchlichtdetektoren ausgebildeten lokalen Detektormodulen 320 jeweils eine untere Alarmschwelle ASᵢ festzulegen, die im Brandfall unterschritten wird.

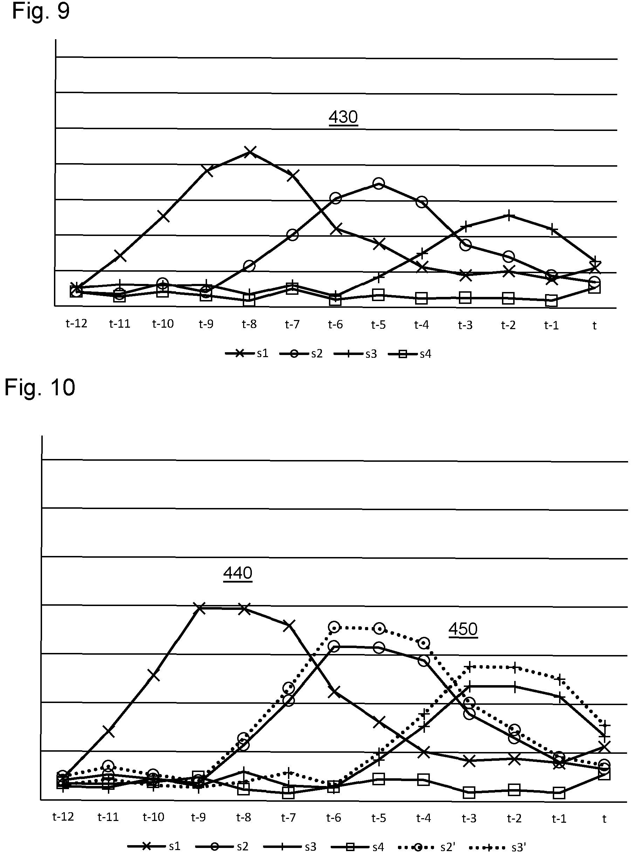

In der Figur 9 ist ein für eine "Täuschungsgröße" typischer, zeitlicher Verlauf der Signalstärke s₁ dargestellt, bei dem diese kurzzeitig, im Bereich der Messzeitpunkte t-12 bis t-8 ansteigt und anschließend, im Bereich der Messzeitpunkte t-8 bis t wieder zurück auf den Grundwert abfällt. Ein entsprechend zeitlich versetzter Anstieg mit anschließendem Abfall der Signalstärken s₂-s₄ kann mit verdünnungsbedingt niedrigeren Werten auch and den lokalen Detektormodulen 322-324 erfasst werden. Bei Verwendung von als Durchlichtdetektoren ausgebildeten lokalen Detektormodulen 320 wäre jeweils ein umgekehrter Verlauf, bei dem die Signalstärken sᵢ zunächst abfallen und anschließend wieder ansteigen, zu beobachten.

In regelmäßigen zeitlichen Abständen ist das Ansaugpartikelerkennungssystem 100 auf dessen volle Funktionsfähigkeit hin zu überprüfen. Hierzu kann bspw. ein Testaerosol über den ersten Überwachungsbereich 1 in die Rohr- und/oder Schlauchleitung 210 eingeleitet werden. Ein typisches "Testmuster" 440 zusammen mit einem typischen "Verschmutzungsmuster" 450 ist im Diagramm der Figur 10 beispielhaft dargestellt und entspricht grundsätzlich dem Signalstärkenverlauf der Täuschungsgröße 430. Beispielhaft sind für den zweiten Überwachungsbereich 2 sowie den dritten Überwachungsbereich 3 sind jeweilige Verläufe der Signalstärken s_{2'} und s_{3'}, die das jeweilige Verschmutzungsmuster 450 zeigen gestrichelt eingezeichnet. Die Verläufe weisen auf Verschmutzung und/oder Verstopfung einer oder mehrerer der entsprechenden Ansaugöffnungen 222, 223 hin. Im Falle einer Verschmutzung und/oder Verstopfung wird eine geringere Prüffluidmenge durch die jeweilige Ansaugöffnung 222, 223 angesaugt, das Verdünnungsverhältnis V₂, V₃ sinkt und die erfassten Signalstärken s_{2'}, s_{3'} liegen über den zu erwartenden Signalstärken s₂, s₃. Bei Verwendung von als Durchlichtdetektoren ausgebildeten lokalen Detektormodulen 320 stellt sich der jeweilige Signalstärkenverlauf entsprechend umgekehrt dar.

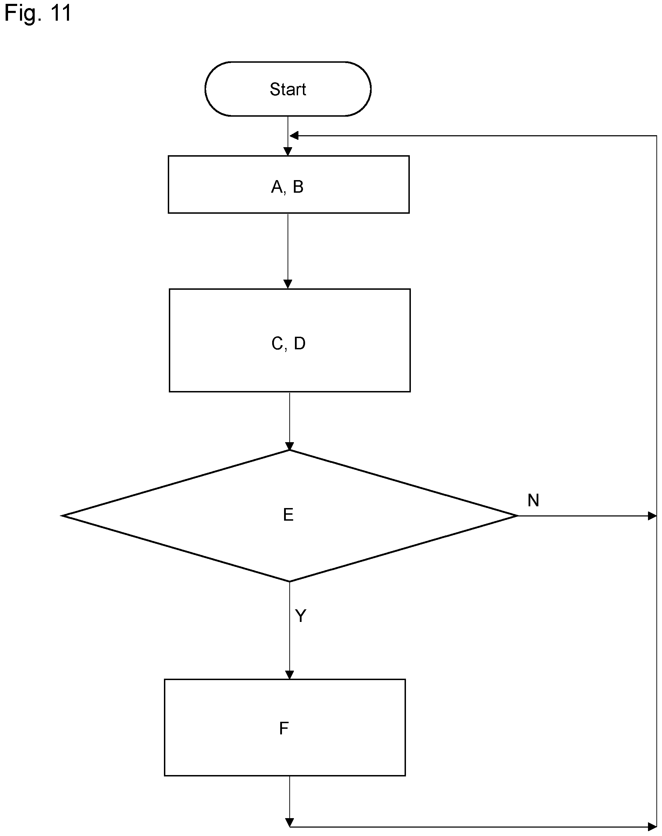

Die Figur 11 zeigt ein Flussdiagramm einer ersten beispielhaften Variante eines erfindungsgemäßen Verfahrens zum Erkennen und/oder Lokalisieren eines Brandes und/oder einer Brandentstehung in einem oder mehreren Überwachungsbereichen i, welche vorzugsweise mit einem erfindungsgemäßen Ansaugpartikelerkennungssystem 100, insbesondere gemäß der Figur 1, durchgeführt wird. Das Verfahren ermöglicht eine schnelle Branderkennung und wird gestartet, bzw. wird das Ansaugpartikelerkennungssystem 100 in Betrieb genommen, indem die Ansaugeinrichtung 230, insbesondere mittels der Recheneinheit 130 eingeschaltet wird. Hierdurch wird in einem ersten Schritt A eine Prüffluidströmung 211 entlang der Rohr- und/oder Schlauchleitung 210 erzeugt. Über in die Überwachungsbereiche i mündende Ansaugöffnungen 220 wird die jeweils darin enthaltene Atmosphäre, insbesondere Luft, in Form einer jeweiligen Prüffluidmenge aus den Überwachungsbereichen i entnommen und in Richtung der Ansaugeinrichtung 230 transportiert. Als Teil der Prüffluidströmung 211 passieren die entnommenen Prüffluidmengen, in einem zweiten Schritt B, alle weiteren, stromabwärts angeordneten lokalen Detektormodule 320.

In einem dritten Schritt C wird entweder Streulicht, das an in der Prüffluidströmung 211 und/oder in dem jeweiligen Überwachungsbereich i enthaltenen Streu- und/oder Rauchpartikeln gestreut wird oder alternativ, bei Verwendung von Durchlichtdetektoren als lokale Detektormodule 320, die Streu- und/oder Rauchpartikel passierendes Durchlicht von den durchströmten, lokalen Detektormodulen 320 erfasst und in einem vierten Schritt D das jeweils erfasste Streulicht und/oder Durchlicht über mindestens einen Lichtleiter 310, gemäß der Figur 1 über die mindestens eine erste Lichtleitfaser 311, an eine zentrale Analyseeinrichtung 110 weitergeleitet. In der zentralen Analyseeinrichtung 110 wird die jeweilige Signalstärke sᵢ der von den den jeweiligen Überwachungsbereichen i zugeordneten lokalen Detektormodulen 320 stammenden Streulicht- und/oder Durchlichtsignalen gemessen. Vorteilhaft ist es hierzu das weitergeleitete Streulicht und/oder Durchlicht mittels eines Lichtempfängers 111, insbesondere mittels eines LWL-Detektormoduls, in ein Strom- und/oder Spannungssignal umzuwandeln, welches dann von der Recheneinheit 130 der zentralen Analyseeinrichtung 110 digital verarbeitbar ist.

Um einen Brand und/oder eine Brandentstehung zu erkennen, werden von der Reicheneinheit 130 in einem fünften Schritt E die jeweiligen Signalstärken sᵢ ausgewertet. Hierzu prüft die Recheneinheit 130 jede, von einem lokalen Detektormodul 320 erfasste Signalstärke sᵢ dahingehend, ob eine für dieses lokale Detektormodul 320 individuell hinterlegte Alarmschwelle ASᵢ. überschritten wird (s. Figur 8 "Brandmuster"). Sofern die erfasste Signalstärke sᵢ von zumindest einem der lokalen Detektormodule 320 den Wert der zugehörigen Alarmschwelle ASᵢ überschreitet (= Y) wird ein Brand und/oder eine Brandentstehung erkannt und kann vorteilhaft in einem sechsten Schritt F gemeldet werden. Sofern die erfasste Signalstärke sᵢ von keinem der lokalen Detektormodule 320 den Wert der zugehörigen Alarmschwelle ASᵢ überschreitet (= N; s. Figur 7 "Frischluftsignal"), aber auch optional im Anschluss an eine Brand- und/oder Brandentstehungsmeldung, wird das Verfahren fortgesetzt, wobei die Schritte A bis E kontinuierlich durchlaufen werden. Bei Verwendung von als Durchlichtdetektoren ausgebildeten lokalen Detektormodulen 320 erfolgt die Erkennung entsprechend umgekehrt, sofern die erfasste Signalstärke sᵢ von zumindest einem der lokalen Detektormodule 320 den Wert der zugehörigen Alarmschwelle ASᵢ unterschreitet.

Zusätzlich zur Erkennung kann im fünften Schritt E auch eine Lokalisierung des Brandes und/oder der Brandentstehung durchgeführt werden, indem das erfasste Streulichtsignal (bzw. Durchlichtsignal), dessen Signalstärke sᵢ die zugehörige Alarmschwelle ASᵢ über- (bzw. unter-)schreitet dem zugehörigen lokalen Detektormodul 320 und folglich dem Überwachungsbereich i, in dem die Streu- und/oder Rauchpartikel vorliegen, zugeordnet wird. Hierzu sind die den einzelnen Überwachungsbereichen i zugeordneten Ansaugöffnungen 220 zweckmäßigerweise entlang der Rohr- und/oder Schlauchleitung 210 in Reihe geschaltet, wodurch die Verdünnung der Prüffluidströmung 211 in Richtung der Ansaugeinrichtung 230 zunimmt. Die sich daraus ergebenden Verdünnungsverhältnisse Vᵢ für die jeweiligen Überwachungsbereiche i bzw. am zugeordneten, lokalen Detektormodul 320 sind als Datensatz oder Datenmodell auf der Speichereinheit 131 der Recheneinheit 130 hinterlegt und können zur Lokalisierung des Brandes- und/oder der Brandentstehung mit den erfassten Signalstärken sᵢ korreliert bzw. abgeglichen werden. Im sechsten Schritt F wird dann, bei Erkennen eines Brandes und/oder einer Brandgefahr, zweckmäßigerweise auch zusätzlich der Ort des Brandes und/oder der Brandgefahr anhand das zugeordneten lokalen Detektormoduls 320 bzw. Überwachungsbereichs i gemeldet, bevor das Verfahren mit Schritt A kontinuierlich fortgesetzt wird.

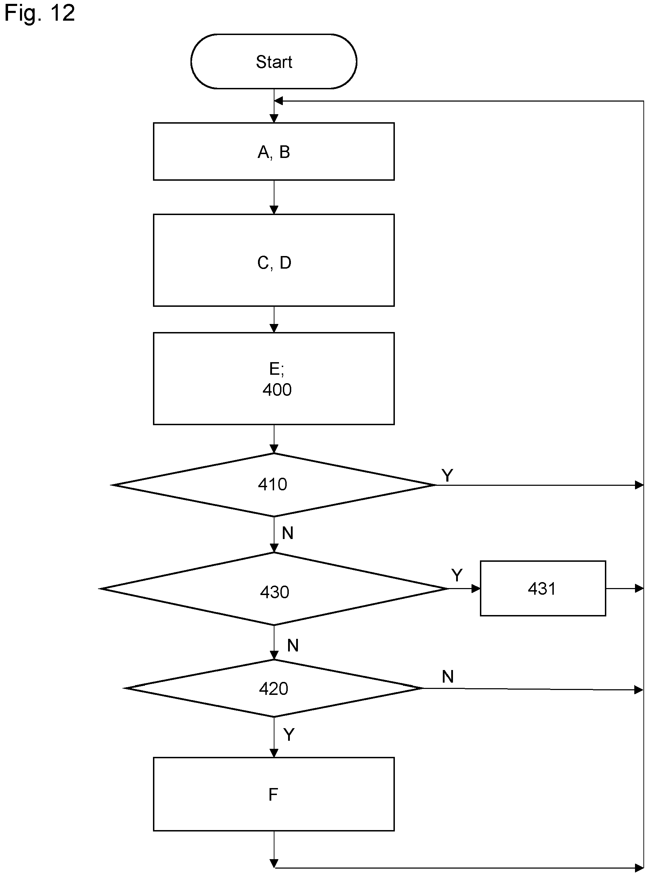

Ein Flussdiagramm einer zweiten beispielhaften Variante eines erfindungsgemäßen Verfahrens zum Erkennen und/oder Lokalisieren eines Brandes und/oder einer Brandentstehung, bei dem im Schritt E außerdem eine Plausibilitätsprüfung 400 vorgenommen wird, kann der Figur 12 entnommen werden. Die Schritte A, B und C werden gemäß der ersten beispielhaften Variante durchgeführt. Im vierten Schritt D wird die jeweilige Signalstärke sᵢ der aus den zugehörigen Überwachungsbereichen i stammenden Streulicht- und/oder Durchlichtsignalen gemessen und zusätzlich auf der Speichereinheit 131 der Recheneinheit 130 gespeichert. Hierbei wird ein zeitlicher Verlauf der Signalstärken sᵢ über eine zuvor festgelegte Zeitspanne erstellt, indem zu periodisch wiederkehrenden Zeitpunkten t-12 bis t Messwerte der erfassten Signalstärken sᵢ hinterlegt werden. Die so ermittelten Messdatenverläufe werden im Rahmen der Plausibilitätsprüfung 400 mit auf der Speichereinheit 131 hinterlegten Datensätzen oder Datenmodellen, bspw. in Form von Erkennungsmustern verglichen, die für den jeweiligen Fall typische zeitliche Verläufe von Signalstärken sᵢ über die Zeitpunkte t-12 bis t abbilden. Nachfolgend werden beispielhaft drei mögliche Schritte einer Plausibilitätsprüfung 400 näher erläutert.

Sofern ein von der Recheneinheit 130 durchgeführter Vergleich des Verlaufs der erfassten Signalstärken sᵢ mit einem hinterlegten Frischluftsignal 410 eine ausreichende Übereinstimmung liefert (= Y) kann die Plausibilitätsprüfung 400 abgeschlossen und das Verfahren mit dem ersten Schritt A kontinuierlich fortgesetzt werden. Liefert der durchgeführte Vergleich keine ausreichende Übereinstimmung (= N) wird die Plausibilitätsprüfung 400 fortgesetzt.

Hierbei kann die Recheneinheit 130 das Vorliegen einer (kurzzeitigen) Täuschungsgröße 430 durch Vergleich des Verlaufs der erfassten Signalstärken sᵢ mit einem entsprechend hinterlegten Erkennungsmuster für eine Täuschungsgröße 430 prüfen. Bei positivem Prüfergebnis (= Y) kann eine Meldung 431 zum Vorliegen einer Täuschungsgröße 430 ausgegeben werden und das Verfahren wird mit dem ersten Schritt A kontinuierlich fortgesetzt. Fällt die Prüfung auf Vorliegen einer Täuschungsgröße 430 negativ aus (= N) wird die Plausibilitätsprüfung 400 weitergeführt.

Teil der Plausibilitätsprüfung kann auch ein Vergleich des Verlaufs der erfassten Signalstärken sᵢ mit einem entsprechend hinterlegten Brandmuster 420 sein. Sofern der Verlauf der erfassten Signalstärken si vom zu erwartenden Brandmuster 420 abweicht (= N), wird das Verfahren mit dem ersten Schritt A kontinuierlich fortgesetzt. Wird hingegen eine (ausreichende) Übereinstimmung mit dem zu erwartenden Brandmuster 420 festgestellt, werden im Schritt F ein Brand und/oder eine Brandentstehung zusammen mit dem Überwachungsbereich i, aus dem die Streu- und/oder Rauchpartikel stammen, gemeldet.

Sowohl die beschriebenen Schritte der Plausibilitätsprüfung 400 als auch deren Reihenfolge ist jeweils beispielhaft. Alle Schritte sind optional und können bedarfsweise in den Verfahrensablauf aufgenommen oder durch zusätzlich Schritte ergänzt und/oder ersetzt werden. Zum Beispiel können im Rahmen der Plausibilitätsprüfung 400 auch die aus dem einen oder den mehreren Überwachungsbereichen i jeweils entnommenen Prüffluidmengen durch das zentrale Streulichtdetektormodul 112 redundant erfasst und der mit dem zentralen Streulichtdetektormodul 112 ermittelte Datensatz mit den von den lokalen Detektormodulen 320 stammenden Datensätzen verglichen werden.

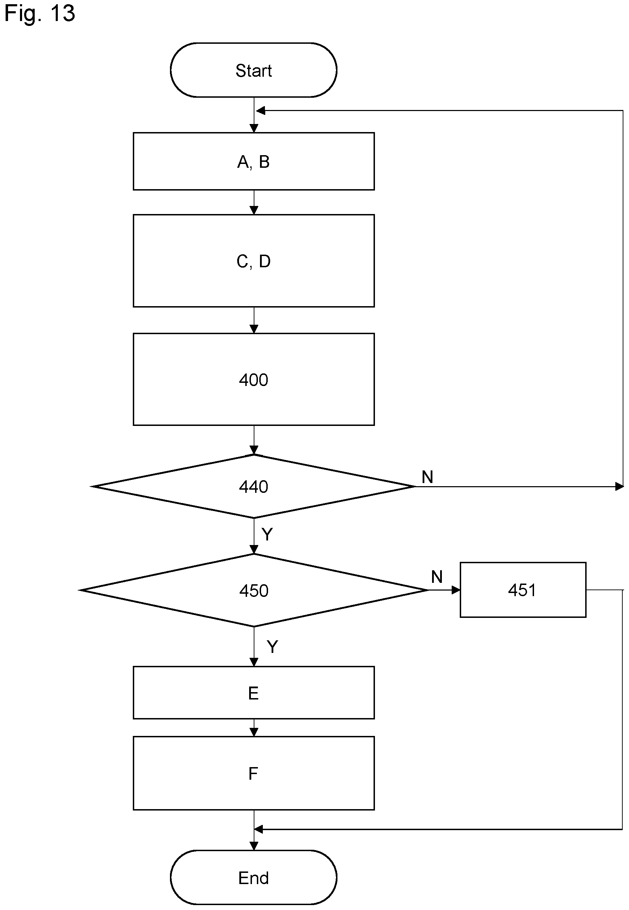

Im Flussdiagramm der Figur 13 ist ein dritter beispielhafter Verfahrensablauf gezeigt, bei dem das Ansaugpartikelerkennungssystem 100 zur Wartung und Überprüfung der vollen Funktionsfähigkeit mit einem Testpartikel enthaltenden Testaerosol beaufschlagt wird. Zur Einleitung des Programmablaufs wird das Ansaugpartikelerkennungssystem 100 in einem Servicemode gestartet und die Ansaugeinrichtung 230 zur Erzeugung der Prüffluidströmung 211 eingeschaltet. Das Testaerosol wird in einen oder mehrere Überwachungsbereiche i eingeleitet, über die Ansaugöffnungen 220 als Bestandteil der Prüffluidmengen entnommen und passiert in der Prüffluidströmung 211 die lokalen Detektormodule 320 (Schritte A, B). Hierdurch erfassen die lokalen Detektormodule 320 an den Testpartikeln gestreutes Streulicht oder die Testpartikel passierendes Durchlicht, welches an die zentrale Analyseeinrichtung 110 weitergeleitet und dort gemessen wird (Schritte C und D). Die gemessene Signalstärke sᵢ wird über eine vorgegebene Zeitspanne aufgezeichnet und die aufgezeichneten Verläufe werden einem für das Testaerosol vorgesehenen Ablauf einer Plausibilitätsprüfung 400 unterzogen.

Hierbei werden von der Recheneinheit 130 die zeitlichen Verläufe der von den lokalen Detektormodulen 320 übermittelten Signalstärken sᵢ mit einem für das Testaerosol typischen und auf der Speichereinheit 131 hinterlegten Testmuster 440 verglichen. Wird ein Testmuster 440 und somit die Einleitung des Testaerosols in das Fluidleitungssystem 200 erkannt (= Y), wird die Plausibilitätsprüfung 400 fortgeführt, bei negativem Ergebnis (= N) wird das Verfahren ab dem ersten Schritt A fortgesetzt.

Im Anschluss an die Erkennung des Testaerosols führt die Recheneinheit 130 eine Prüfung auf Verschmutzung einer oder mehrerer Ansaugöffnungen 220 durch, indem die zeitlichen Verläufe der von den lokalen Detektormodulen 320 übermittelten Signalstärken sᵢ mit einem Verschmutzungsmuster 450 verglichen werden. Ein beispielhaftes Verschmutzungsmuster 450, bei dem dem zweiten Überwachungsbereich 2 und dem dritten Überwachungsbereich 3 zugeordnete Ansaugöffnungen 222 und 223 verstopft und/oder verschmutzt sind ist in der Figur 10 beispielhaft aufgetragen und wurde bereits im zugehörigen Beschreibungsabsatz weiter oben erläutert. Sofern anhand des durchgeführten Vergleichs keine Verschmutzung und/oder Verstopfung erkannt wird (= N), wird eine entsprechende Meldung "sauber" 451 ausgegeben und das Verfahren bzw. der Programmablauf kann beendet werden. Wird hingegen eine Verschmutzung und/oder Verstopfung erkannt (= Y), wird der zugehörige Überwachungsbereich i entsprechend dem zweiten beispielhaften Verfahrensablauf gemäß der Figur 12 im fünften Schritt E lokalisiert. Im sechsten Verfahrensschritt F wird die Verschmutzung und/oder Verstopfung zusammen mit dem zugehörigen Überwachungsbereich i gemeldet, bevor das Verfahren bzw. der Programmablauf beendet werden.

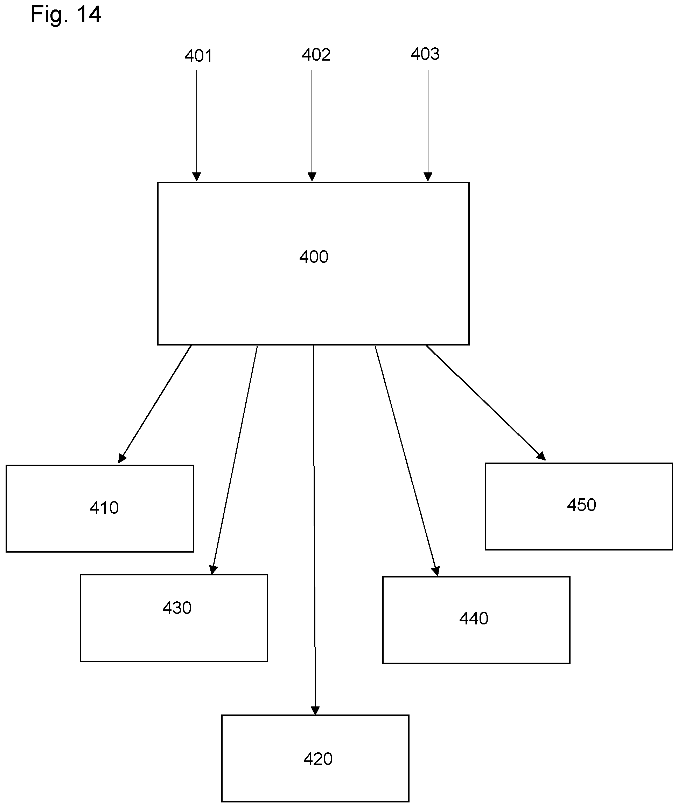

Schließlich kann der Figur 14 eine schematische Übersicht der Plausibilitätsprüfung 400 entnommen werden, bei welcher einerseits die mit den lokalen Detektormodulen 320 gemessenen Datensätze 401, der mit dem zentralen Streulichtdetektormodul 112 gemessene Datensatz 402 und andererseits die auf den geometrischen und strömungstechnischen Eigenschaften des Fluidleitungssystems 200 beruhenden Datensätze oder Datenmodelle 403, insbesondere die Verdünnungsverhältnisse Vi, die auf der Speichereinheit 131 hinterlegt sind mit einbezogen werden. Anhand eines Vergleichs der gemessenen Werte mit den hinterlegten Werten können im Rahmen der Plausibilitätsprüfung 400 z. B. ein Frischluftsignal 410, ein Brandmuster 420, eine Täuschungsgröße 430, ein Testmuster 440 und/oder ein Verschmutzungsmuster 450 erkannt und deren Ursache lokalisiert werden. Die Mustererkennung kann mit bekannten Bilderkennungsmethoden, wie CNN (convolutional neural network) durchgeführt werden.

### Bezugszeichenliste

- 100: Ansaugpartikelerkennungssystem
- 110: zentrale Analyseeinrichtung
- 111: Lichtempfänger
- 112: zentrales Streulichtdetektormodul, insbesondere RAS-Detektormodul
- 113: Lichtquelle
- 120: Gehäuse
- 130: Recheneinheit, insbesondere Prozessor
- 131: Speichereinheit

- 200: Fluidleitungssystem
- 210: Rohr- und/oder Schlauchleitung
- 211: Prüffluidströmung
- 220: Ansaugöffnung
- 221: Ansaugöffnungen des ersten Überwachungsbereichs
- 222: Ansaugöffnungen des zweiten Überwachungsbereichs
- 223: Ansaugöffnungen des dritten Überwachungsbereichs
- 224: Ansaugöffnungen des vierten Überwachungsbereichs
- 230: Ansaugeinrichtung
- 300: Lichtleitsystem
- 310: Lichtleiter
- 311: erste Lichtleitfaser
- 312: zweite Lichtleitfaser
- 313: erstes Faserende
- 314: zweites Faserende
- 315: erster Polfilter
- 316: zweiter Polfilter
- 320: lokales Detektormodul
- 321: lokales Detektormodul des ersten Überwachungsbereichs
- 322: lokales Detektormodul des zweiten Überwachungsbereichs
- 323: lokales Detektormodul des dritten Überwachungsbereichs
- 324: lokales Detektormodul des vierten Überwachungsbereichs
- 330: Absorber

- 400: Plausibilitätsprüfung
- 401: gemessener Datensatz, lokales Detektormodul
- 402: gemessener Datensatz, zentrales Streulichtdetektormodul
- 403: hinterlegte Datensätze oder Datenmodelle
- 410: Frischluftsignal
- 420: Brandmuster
- 430: Täuschungsgröße
- 431: Meldung Täuschungsgröße
- 440: Testmuster
- 450: Verschmutzungsmuster
- 451: Meldung "sauber"

- i = 1 ... x: Überwachungsbereich
- ASᵢ: Alarmschwelle
- sᵢ: Signalstärke
- s_{i'}: erfasste Signalstärke
- t: Zeitpunkt
- Vᵢ: Verdünnungsverhältnis
- N: Nein
- Y: Ja

- A: erster Schritt
- B: zweiter Schritt
- C: dritter Schritt
- D: vierter Schritt
- E: fünfter Schritt
- F: sechster Schritt

## Patentansprüche

1. Ansaugpartikelerkennungssystem (100) zum Erkennen und Lokalisieren eines Brandes und/oder einer Brandentstehung in einem oder mehreren Überwachungsbereichen (100), aufweisend
- ein Fluidleitungssystem (200) mit mindestens einer Rohr- und/oder Schlauchleitung (210), die über mehrere Ansaugöffnungen (220) zur jeweiligen Entnahme einer Prüffluidmenge in den einen oder die mehreren Überwachungsbereiche (i) mündet und mit einer Ansaugeinrichtung (230), die zur Erzeugung einer Prüffluidströmung (211) entlang der mindestens einen Rohr- und/oder Schlauchleitung (210) fluidleitend mit der mindestens einen Rohr- und/oder Schlauchleitung (210) verbunden ist, sowie
- ein Lichtleitsystem (300) mit mehreren lokalen Detektormodulen (320), die jeweils zumindest einer Ansaugöffnung (220) zugeordnet und zur lokalen Erfassung und Weiterleitung von an in dem jeweiligen Überwachungsbereich (i) und der Prüffluidströmung (211) vorliegenden Streu- und/oder Rauchpartikeln gestreutem Streulicht und/oder zur Erfassung und Weiterleitung von die Streu- und/oder Rauchpartikel passierendem Durchlicht ausgebildet und innerhalb der Prüffluidströmung (211) angeordnet sind, und mit mindestens einem Lichtleiter (310), der mit den lokalen Detektormodulen (320) und einer zentralen Analyseeinrichtung (110) zur Auswertung des von den lokalen Detektormodulen (320) jeweils erfassten und weitergeleiteten Streulichts und/oder Durchlichts in lichtleitender Verbindung steht, und wobei zur Zuordnung des weitergeleiteten Streulichts und/oder Durchlichts zu den jeweiligen lokalen Detektormodulen (320) entweder
- die zentrale Analyseeinrichtung (110) mindestens ein Modulationsmittel zur Modulation des von mindestens einer Lichtquelle (113) gesendeten Lichts und zur Zuordnung des von mindestens einem Lichtempfänger (111) erfassten Streulichts und/oder Durchlichts zu den mehreren lokalen Detektormodulen (320) umfasst, oder
- die lokalen Detektormodule (320) entlang der mindestens einen Rohr- und/oder Schlauchleitung (210) angeordnet und jeweils einer vorgegebenen Anzahl an Ansaugöffnungen (220) zugeordnet sind, wobei an dem jeweiligen lokalen Detektormodul (320) ein gewünschtes Verdünnungsverhältnis (Vᵢ) der Prüffluidströmung (211) bedarfsweise festlegbar ist, oder
- der Lichtleiter jeweilige, den lokalen Detektormodulen zugeordnete erste und zweite Lichtleitfasern (311, 312) umfasst.

2. Ansaugpartikelerkennungssystem (100) nach Anspruch 1,
**dadurch gekennzeichnet, dass**
die lokalen Detektormodule (320) jeweils innerhalb eines Strömungsquerschnitts der mindestens einen Rohr- und/oder Schlauchleitung (210) angeordnet sind.

3. Ansaugpartikelerkennungssystem (100) nach Anspruch 1 oder 2,
**dadurch gekennzeichnet, dass**
der mindestens eine Lichtleiter (310) des Lichtleitsystems (300) als Lichtwellenleiter oder Glasfaserkabel mit mindestens einer ersten Lichtleitfaser (311) und mindestens einer zweiten Lichtleitfaser (312) zur Übertragung von Licht und/oder Streulicht zwischen den mehreren lokalen Detektormodulen (320) und der zentralen Analyseeinrichtung (110) ausgebildet ist.

4. Ansaugpartikelerkennungssystem (100) nach Anspruch 3,
**dadurch gekennzeichnet, dass**
die lokalen Detektormodule (320) jeweils ein erstes Faserende (313) einer ersten Lichtleitfaser (311) und ein zweites Faserende (314) einer zweiten Lichtleitfaser (312) aufweisen, wobei das erste Faserende (313) der ersten Lichtleitfaser (311) und das zweite Faserende (314) der zweiten Lichtleitfaser (312) in einem bedarfsweise wählbaren Winkel zueinander ausgerichtet sind.

5. Ansaugpartikelerkennungssystem (100) nach einem der Ansprüche 3 oder 4,
**dadurch gekennzeichnet, dass**
die zentrale Analyseeinrichtung (110) mindestens einen Lichtempfänger (111) zur Umwandlung des weitergeleiteten Streulichts, insbesondere in ein Strom- und/oder Spannungssignal, und vorzugsweise eine Lichtquelle (113) aufweist, wobei die mindestens eine erste Lichtleitfaser (311) lichtleitend mit dem Lichtempfänger (111) und die mindestens eine zweite Lichtleitfaser (312) insbesondere lichtleitend mit der Lichtquelle (113) verbunden ist.

6. Ansaugpartikelerkennungssystem (100) nach einem der vorhergehenden Ansprüche,
**dadurch gekennzeichnet, dass**
bedarfsweise festgelegte Verdünnungsverhältnisse (Vᵢ), die an den jeweiligen lokalen Detektormodulen (320) vorliegen, als Datensatz oder Datenmodell (403) in der zentralen Analyseeinrichtung (110) hinterlegt sind.

7. Ansaugpartikelerkennungssystem (100) nach einem der vorhergehenden Ansprüche,
**dadurch gekennzeichnet, dass**
die zentrale Analyseeinrichtung (110) mindestens ein fluiddurchströmtes, zentrales Streulichtdetektormodul (112) aufweist, das fluidleitend mit dem Fluidleitungssystem (200), insbesondere mit der mindestens einen Rohr- und/oder Schlauchleitung (210), verbunden ist und zur zentralen Erfassung von an Streu- und/oder Rauchpartikeln, die in der Prüffluidströmung (211) enthalten sind, gestreutem Streulicht ausgebildet ist.

8. Ansaugpartikelerkennungssystem (100) nach Anspruch 7,
**dadurch gekennzeichnet, dass**
die zentrale Analyseeinrichtung (110) eine Recheneinheit (130) aufweist, die zur Auswertung des von dem fluiddurchströmten, zentralen Streulichtdetektormoduls (112) erfassten Streulichts ausgebildet ist.

9. Ansaugpartikelerkennungssystem (100) nach einem der vorhergehenden Ansprüche,
**dadurch gekennzeichnet, dass**
die zentrale Analyseeinrichtung (110) eine Recheneinheit (130) aufweist, die zur Auswertung des von dem einen oder den mehreren lokalen Detektormodulen (320) erfassten Streulichts und/oder Durchlichts und/oder zur Korrelation mit den als Datensatz oder Datenmodell (403) hinterlegten Verdünnungsverhältnissen (Vᵢ) ausgebildet ist.

10. Verfahren zum Erkennen und Lokalisieren eines Brandes und/oder einer Brandentstehung in einem oder mehreren Überwachungsbereichen (i), für ein Ansaugpartikelerkennungssystem (100) nach einem der vorhergehenden Ansprüche, wobei
- in einem ersten Schritt (A) eine jeweilige Prüffluidmenge über ein Fluidleitungssystem (200) mit mindestens einer Rohr- und/oder Schlauchleitung (210) und einer oder mehreren, jeweils in einen Überwachungsbereich (i) mündenden Ansaugöffnungen (220) aus dem einen oder den mehreren Überwachungsbereichen (i) entnommen wird,
- in einem zweiten Schritt (B) die aus dem einen oder den mehreren Überwachungsbereichen (i) entnommene Prüffluidmenge als Teil einer Prüffluidströmung (211) eines oder mehrere, lokale Detektormodule (320), die jeweils einer oder mehreren Ansaugöffnungen (220) zugeordnet sind, durchströmt,
- in einem dritten Schritt (C) Streulicht, das an in der Prüffluidströmung (211) und/oder in dem jeweiligen Überwachungsbereich (i) enthaltenen Streu- und/oder Rauchpartikeln gestreut wird und/oder Durchlicht, das die Streu- und/oder Rauchpartikel passiert, von dem einen oder den mehreren durchströmten, lokalen Detektormodulen (320) erfasst wird,
- in einem vierten Schritt (D) das jeweils erfasste Streulicht und/oder Durchlicht über mindestens einen Lichtleiter (310) an eine zentrale Analyseeinrichtung (110) weitergeleitet wird, und
- in einem fünften Schritt (E) das weitergeleitete Streulicht und/oder Durchlicht mittels der zentralen Analyseeinrichtung (110) zum Erkennen eines Brandes und/oder einer Brandentstehung ausgewertet und zur Lokalisierung eines Brandes und/oder einer Brandentstehung dem oder den jeweiligen lokalen Detektormodulen (320) zugeordnet wird.

11. Verfahren nach Anspruch 10,
**dadurch gekennzeichnet, dass**
ein Brand und/oder eine Brandentstehung erkannt wird, sofern das von zumindest einem lokalen Detektormodul (320) erfasste und an die zentrale Analyseeinrichtung (110) weitergeleitete Streulicht eine dort hinterlegte Alarmschwelle (ASᵢ) überschreitet.

12. Verfahren nach einem der Ansprüche 10 oder 11,
**dadurch gekennzeichnet, dass**
das erfasste und weitergeleitete Streulicht und/oder Durchlicht den jeweiligen lokalen Detektormodulen (320) zugeordnet wird, indem ein in der zentralen Analyseeinrichtung (110) hinterlegter Datensatz oder Datenmodell (403) an für die jeweiligen lokalen Detektormodule (320) festgelegten Verdünnungsverhältnissen (Vᵢ) mit dem weitergeleiteten Streulicht und/oder Durchlicht korreliert wird.

13. Verfahren nach einem der Ansprüche 10 bis 12,
**dadurch gekennzeichnet, dass**
die aus dem einen oder den mehreren Überwachungsbereichen (i) jeweils entnommenen Prüffluidmengen als Prüffluidströmung (211) ein zentrales Streulichtdetektormodul (112) durchströmen und das von dem zentralen Streulichtdetektormodul (112) erfasste Streulicht mit dem von dem einen oder den mehreren lokalen Detektormodulen (320) erfassten Streulicht und/oder Durchlicht verglichen wird.

14. Verfahren nach einem der Ansprüche 10 bis 13,
**dadurch gekennzeichnet, dass**
Testpartikel, insbesondere als Testaerosol, in einem oder mehreren der Überwachungsbereiche (i) oder in der Nähe einer oder mehrere Ansaugöffnungen (220) freigesetzt werden, wobei die lokalen Detektormodule (320) im dritten Schritt (C) das an den Testpartikeln gestreute Streulicht und/oder das die Testpartikel passierende Durchlicht erfassen.

## Claims

1. An intake particle detection system (100) for recognising and localising a fire and/or the development of a fire in one or more monitored areas (100) comprising
- a fluid conduit system (200) with at least one pipe line and/or hose line (210) which opens into the one or more monitored areas (i) via a plurality of intake openings (220) for the respective removal of a quantity of test fluid and, a intake device (230), which is connected to the at least one pipe line and/or hose line (210) in a manner which conducts fluids in order to generate a test fluid flow (211) along the at least one pipe line and/or hose line (210) as well as
- an optical fibre system (300) with a plurality of local detector modules (320) which are each assigned to at least one intake opening (220) and are designed for the local detection and forwarding of scattered light which is scattered by scattered particles and/or smoke particles that are present in the respective monitored area (i) and the test fluid flow (211) and/or for the detection and forwarding of forwarded light passing through the scattered particles and/or smoke particles and are arranged within the test fluid flow (211) and with at least one optical fibre (310), which is in a light-conducting connection with the local detector modules (320) and a central analysis device (110) for analysing the scattered light and/or forwarded light that, in each case, is detected and forwarded by the local detector modules (320), and wherein, in order to assign the forwarded scattered light and/or forwarded light to the respective local detector modules (320), either
- the central analysis device (110) comprises at least one modulation means for modulating the light emitted by at least one light source (113) and for assigning the scattered light and/or forwarded light detected by at least one light receiver (111) to the plurality of local detector modules (320), or
- the local detector modules (320) are arranged along the at least one pipe line and/or hose line (210) and are each assigned to a predetermined number of intake openings (220), wherein a desired dilution ratio (Vᵢ) of the test fluid flow (211) can be defined as required at the respective local detector module (320), or
- the optical fibre comprises respective first and second fibre optical waveguides (311, 312) associated with the local detector modules.

2. The intake particle detection system (100) according to claim 1, **characterised in that**
the local detector modules (320) are each arranged within a flow cross-section of the at least one pipe line and/or hose line (210).

3. The intake particle detection system (100) according to claims 1 or 2, **characterised in that**
the at least one optical fibre (310) of the optical fibre system (300) is designed as a fibre optic cable or glass fibre cable with at least one first fibre optical waveguide (311) and at least one second fibre optical waveguide (312) for transmitting light and/or scattered light between the plurality of local detector modules (320) and the central analysis device (110).

4. The intake particle detection system (100) according to claim 3, **characterised in that**
the local detector modules (320) each have a first fibre end (313) of a first optical waveguide (311) and a second fibre end (314) of a second fibre optical waveguide (312), wherein the first fibre end (313) of the first optical waveguide (311) and the second fibre end (314) of the second fibre optical waveguide (312) are aligned at a selectable angle to one another as required.

5. The intake particle detection system (100) according to claims 3 or 4, **characterised in that**
the central analysis device (110) comprises at least one light receiver (111) for converting the scattered light that has been forwarded, especially into a flow signal and/or voltage signal, and preferably a light source (113), wherein the at least one fibre optical waveguide (311) is connected to the light receiver (111) in a manner that conducts light and the at least one second fibre optical waveguide (312) is connected to the light source (113) especially in a manner that conducts light.

6. The intake particle detection system (100) according to any one of the preceding claims,
**characterised in that**
dilution ratios (Vᵢ) determined as required, which are present at the respective local detector modules (320), are stored as a data set or data model (403) in the central analysis device (110).

7. The intake particle detection system (100) according to any one of the preceding claims,
**characterised in that**
the central analysis device (110) has at least one central scattered light detector module (112) through which fluid flows, which is connected to the fluid conduit system (200) in a manner which conducts fluids, especially to the at least one pipe line and/or hose line (210) and is designed for the central detection of scattered light that is scattered by scattered particles and/or smoke particles which are contained in the test fluid flow (211).

8. The intake particle detection system (100) according to claim 7,
**characterised in that**
the central analysis device (110) has a computing unit (130) which is designed to evaluate the scattered light detected by the central scattered light detector module (112) through which the fluid flows.

9. The intake particle detection system (100) according to any one of the preceding claims,
**characterised in that**
the central analysis device (110) has a computing unit (130) which is designed to evaluate the scattered light and/or transmitted light detected by the one or more local detector modules (320) and/or to correlate it with the dilution ratios (Vᵢ) stored as a data set or data model (403).

10. A method for detecting and localising a fire and/or the development of a fire in one or more monitored areas (i), for an intake particle detection system (100) according to one of the preceding claims, wherein
- in a first step (A), a respective quantity of test fluid is withdrawn from the one or more monitored areas (i) via a fluid conduit system (200) with at least one pipe line and/or hose line (210) and one or more intake openings (220), each opening into a monitored area (i),
- in a second step (B), the quantity of test fluid withdrawn from the one or more monitored areas (i) flows as part of a test fluid flow (211) through one or more local detector modules (320), each of which is assigned to one or more intake openings (220),
- in a third step (C), scattered light, which is scattered by scattered particles and/or smoke particles contained in the test fluid flow (211) and/or in the respective monitored area (i), and/or transmitted light, which passes through the scattered and/or smoke particles, is detected by the one or more local detector modules (320) through which the fluid flows,
- in a fourth step (D), the respectively detected scattered light and/or transmitted light is forwarded to a central analysis device (110) via at least one optical fibre (310), and
- in a fifth step (E), the forwarded scattered light and/or transmitted light is evaluated by means of the central analysis device (110) for detecting a fire and/or the development of a fire and is assigned to the respective local detector module or modules (320) for localising a fire and/or the development of a fire.

11. The method according to claim 10,
**characterised in that**
a fire and/or the development of a fire is detected if the scattered light detected by at least one local detector module (320) and forwarded to the central analysis device (110) exceeds an alarm threshold (ASᵢ) that is stored there.

12. The method according to claim 10 or 11,
**characterised in that**
the detected and forwarded scattered light and/or transmitted light is assigned to the respective local detector modules (320) by correlating a data set or data model (403) stored in the central analysis device (110) at dilution ratios (Vᵢ) defined for the respective local detector modules (320) using the forwarded scattered light and/or transmitted light.

13. The method according to any one of claims 10 to 12,
**characterised in that**
the quantities of test fluid withdrawn from the one or more monitored areas (i) each flow through a central scattered light detector module (112) as a test fluid flow (211) and the scattered light detected by the central scattered light detector module (112) is compared with the scattered light and/or transmitted light detected by the one or more local detector modules (320).

14. The method according to any one of claims 10 to 13,
**characterised in that**
test particles are released in one or more of the monitored areas (i) or in the vicinity of one or more intake openings (220), especially as a test aerosol, wherein the local detector modules (320) detect the scattered light scattered by the test particles and/or the transmitted light passing the test particles in the third step (C).

## Revendications

1. Système de reconnaissance de particules d'admission (100) permettant de reconnaître et de localiser un incendie et/ou un début d'incendie dans une ou plusieurs zones de surveillance (100), présentant
- un système de canalisation de fluide (200) comprenant au moins un conduit et/ou tuyau (210) qui débouchent par plusieurs orifices d'admission (220) pour prélever respectivement une quantité de fluide de contrôle dans ladite une ou les plusieurs zones de surveillance (i), et comprenant un dispositif d'admission (230) qui, pour générer un écoulement de fluide de contrôle (211) le long dudit au moins un conduit et/ou tuyau (210), est relié en liaison fluidique audit au moins un conduit et/ou tuyau (210), ainsi que
- un système de guidage de lumière (300) comprenant plusieurs modules de détecteur locaux (320) qui sont associés à au moins un orifice d'admission (220) et sont réalisés pour détecter localement et retransmettre de la lumière diffusée, diffusée au niveau de particules de diffusion et/ou de fumée présentes dans la zone de surveillance (i) respective et l'écoulement de fluide de contrôle (211), et/ou pour détecter et retransmettre la lumière transmise passant par les particules de diffusion et/ou de fumée, et sont disposés dans l'écoulement de fluide de contrôle (211), et comprenant au moins un guide de lumière (310) qui est en communication conductrice de lumière avec les modules de détecteur locaux (320) et un dispositif d'analyse central (110) pour évaluer la lumière diffusée et/ou la lumière passante respectivement détectées et retransmises par les modules de détecteur locaux (320), et dans lequel, pour associer la lumière diffusée et/ou la lumière passante retransmises aux modules de détecteur locaux (320) respectifs, soit
- le dispositif d'analyse central (110) comprend au moins un moyen de modulation pour moduler la lumière émise par au moins une source de lumière (113) et pour associer aux modules de détecteur locaux (320) la lumière diffusée et/ou la lumière passante détectées par au moins un récepteur de lumière (111), soit
- les modules de détecteur locaux (320) sont disposés le long dudit au moins un conduit et/ou tuyau (210) et sont associés respectivement à un nombre prédéfini d'orifices d'admission (220), dans lequel, en fonction des besoins, il est possible de définir un rapport de dilution (Vᵢ) souhaité de l'écoulement de fluide de contrôle (211) au niveau du module de détecteur local (320) respectif, ou
- le guide de lumière comprend des premières et deuxièmes fibres optiques (311, 312) respectives, associées aux modules de détecteur locaux.

2. Système de reconnaissance de particules d'admission (100) selon la revendication 1,
**caractérisé en ce que**
les modules de détecteur locaux (320) sont disposés respectivement à l'intérieur d'une section transversale d'écoulement dudit au moins un conduit et/ou tuyau (210).

3. Système de reconnaissance de particules d'admission (100) selon la revendication 1 ou 2,
**caractérisé en ce que**
ledit au moins un guide de lumière (310) du système de guidage de lumière (300) est réalisé sous la forme d'un guide d'ondes optiques ou d'un câble à fibres optiques avec au moins une première fibre optique (311) et au moins une deuxième fibre optique (312) pour transmettre de la lumière et/ou de la lumière diffusée entre les plusieurs modules de détecteur locaux (320) et le dispositif d'analyse central (110).

4. Système de reconnaissance de particules d'admission (100) selon la revendication 3,
**caractérisé en ce que**
les modules de détecteur locaux (320) présentent respectivement une première extrémité de fibre (313) d'une première fibre optique (311) et une deuxième extrémité de fibre (314) d'une deuxième fibre optique (312), dans lequel la première extrémité de fibre (313) de la première fibre optique (311) et la deuxième extrémité de fibre (314) de la deuxième fibre optique (312) sont alignées l'une par rapport à l'autre dans un angle sélectionnable en fonction des besoins.

5. Système de reconnaissance de particules d'admission (100) selon l'une quelconque des revendications 3 ou 4,
**caractérisé en ce que**
le dispositif d'analyse central (110) présente au moins un récepteur de lumière (111) pour convertir la lumière diffusée retransmise, en particulier en un signal de courant et/ou de tension, et de préférence une source de lumière (113), dans lequel ladite au moins une première fibre optique (311) est reliée en conduction de lumière au récepteur de lumière (111), et ladite au moins une deuxième fibre optique (312) est reliée à la source de lumière (113) en particulier en conduction de lumière.

6. Système de reconnaissance de particules d'admission (100) selon l'une quelconque des revendications précédentes,
**caractérisé en ce que**
des rapports de dilution (Vᵢ) définis en fonction des besoins et qui sont présents au niveau des modules de détecteur locaux (320) respectifs, sont mémorisés sous forme de jeu de données ou de modèle de données (403) dans le dispositif d'analyse central (110).

7. Système de reconnaissance de particules d'admission (100) selon l'une quelconque des revendications précédentes,
**caractérisé en ce que**
le dispositif d'analyse central (110) présente au moins un module de détecteur de lumière diffusée central (112), traversé par un fluide, qui est relié en liaison fluidique au système de canalisation de fluide (200), en particulier audit au moins un conduit et/ou tuyau (210) et est réalisé pour la détection centrale de lumière diffusée, diffusée au niveau de particules de diffusion et/ou de fumée qui sont contenues dans l'écoulement de fluide de contrôle (211).

8. Système de reconnaissance de particules d'admission (100) selon la revendication 7,
**caractérisé en ce que**
le dispositif d'analyse central (110) présente une unité de calcul (130) qui est réalisée pour évaluer la lumière diffusée détectée par le module de détecteur de lumière diffusée central (112), traversé par un fluide.

9. Système de reconnaissance de particules d'admission (100) selon l'une quelconque des revendications précédentes,
**caractérisé en ce que**
le dispositif d'analyse central (110) présente une unité de calcul (130) qui est réalisée pour évaluer la lumière diffusée et/ou la lumière passante détectées par ledit un ou les plusieurs modules de détecteur locaux (320) et/ou pour la corrélation avec les rapports de dilution (Vᵢ) mémorisés sous forme de jeu de données ou de modèle de données (403).

10. Procédé permettant de reconnaître et de localiser un incendie et/ou un début d'incendie dans une ou plusieurs zones de surveillance (i) pour un système de reconnaissance de particules d'admission (100) selon l'une quelconque des revendications précédentes, dans lequel
- dans une première étape (A), une quantité de fluide de contrôle respective est prélevée de ladite une ou des plusieurs zones de surveillance (i) par l'intermédiaire d'un système de canalisation de fluide (200) comprenant au moins un conduit et/ou tuyau (210) et un ou plusieurs orifices d'admission (220) débouchant respectivement dans une zone de surveillance (i),
- dans une deuxième étape (B), la quantité de fluide de contrôle prélevée dans ladite une ou les plusieurs zones de surveillance (i) traverse en faisant partie d'un écoulement de fluide de contrôle (211) un ou plusieurs modules de détecteur locaux (320) qui sont respectivement associés à un ou plusieurs orifices d'admission (220),
- dans une troisième étape (C), de la lumière diffusée qui est diffusée au niveau de particules de diffusion et/ou de fumée contenues dans l'écoulement de fluide de contrôle (211) et/ou dans la zone de surveillance respective (i) et/ou la lumière passante qui passe par les particules de diffusion et/ou de fumée sont détectées par ledit un ou lesdits plusieurs modules de détecteur locaux (320) traversés par un écoulement,
- dans une quatrième étape (D), la lumière diffusée et/ou la lumière passante respectivement détectées sont retransmises par l'intermédiaire d'au moins un guide de lumière (310) à un dispositif d'analyse central (110), et
- dans une cinquième étape (E), la lumière diffusée et/ou la lumière passante retransmises sont évaluées au moyen du dispositif d'analyse central (110) pour reconnaître un incendie et/ou un début d'incendie et sont associées au(x) module(s) de détecteur local (320) respectif(s) pour localiser un incendie et/ou un début d'incendie.

11. Procédé selon la revendication 10,
**caractérisé en ce que**
un incendie et/ou un début d'incendie sont reconnus dans la mesure où la lumière diffusée détectée par ledit au moins un module de détecteur local (320) et retransmise au dispositif d'analyse central (110) dépasse un seuil d'alarme (ASᵢ) qui y est mémorisé.

12. Procédé selon l'une quelconque des revendications 10 ou 11,
**caractérisé en ce que**
la lumière diffusée et/ou la lumière passante détectées et retransmises sont associées aux modules de détecteur locaux (320) respectifs **en ce qu'**un jeu de données ou modèle de données (403) mémorisé dans le dispositif d'analyse central (110) est mis en corrélation au niveau des rapports de dilution (Vᵢ) définis pour les modules de détecteur locaux (320) respectifs avec la lumière diffusée et/ou la lumière passante retransmise.

13. Procédé selon l'une quelconque des revendications 10 à 12,
**caractérisé en ce que**
les quantités de fluide de contrôle respectivement prélevées dans ladite une ou lesdites plusieurs zones de surveillance (i) traversent sous forme d'écoulement de fluide de contrôle (211) un module de détecteur de lumière diffusée central (112), et la lumière diffusée détectée par le module de détecteur de lumière diffusée central (112) est comparée avec la lumière diffusée et/ou la lumière passante détectées par ledit un ou les plusieurs modules de détecteur locaux (320).

14. Procédé selon l'une quelconque des revendications 10 à 13,
**caractérisé en ce que**
des particules de test, en particulier sous forme d'aérosol de test, sont libérées dans une ou plusieurs zones de surveillance (i) ou à proximité d'un ou de plusieurs orifices d'admission (220), dans lequel les modules de détecteur locaux (320) détectent à la troisième étape (C) la lumière diffusée, diffusée au niveau des particules de test, et/ou la lumière passante passant par les particules de test.
